# EUROPEAN PATENT APPLICATION

(11) **EP 2 154 822 A2**
(43) Date of publication of application: **17.02.2010**
(21) Application number: 09173672.8
(22) Date of filing: 04.12.2007
(51) Int. Cl.: H04L 12/18, H04L 29/06

(54) **Securing multicast data**

(30) Priority: 08.12.2006 US 873818 P; 01.11.2007 US 982112
(62) Divisional of application: 07873655.0
(71) Applicant: UNISYS CORPORATION, Blue Bell, PA 19424-0001 (US)
(72) Inventor: Johnson, Robert, A., Pottstown, PA 19464 (US); Duong, Anh, Exton, PA 19431 (US)
(74) Representative: Modiano, Micaela Nadia

(57) **Abstract**

Systems and methods for securing multicast data are described. Data of a multicast, is protected through the use of at least double encryption keys, such as a community-of-interest key and session key. Data of a multicast is also split into portions of multicast in accordance with the session key, and transmitted over a choice of different pathways to one or more endpoints. The community-of-interest key is a prerequisite to joining or requesting deliver of a particular multicast. The community-of-interest key initializes, and exchanges a session key. All endpoints in a particular multicast community-of-interest group share the same session keys values. Endpoints that join a group (tune- in) must be notified of the session keys that are being used by the group at that particular time. A "Join" request is usually sent to an Ethernet address group. That address, is mapped to a community-of-interest of N IP addresses corresponding to each VLAN associated with the community-of-interest (the group) for the multicast.

## Description

### CROSS-REFERENCE TO RELATED APPLICATIONS

The present patent application is a Continuation-in-Part of U.S. Application Serial No. 11/339,974, filed on January 26, 2006 (Atty Dkt No. TN400.US). The content of the aforementioned application is fully incorporated by reference herein.

The present patent application also claims benefit of U.S. Provisional Application Serial No. 60/648,531 filed on January 31, 2005 (Atty Dkt No. TN400.P) and 60/873,818 filed on December 8, 2006 (Atty Dkt No. TN485.P) The content of the aforementioned application is fully incorporated by reference herein.

The present patent application is also related to U.S. Application Serial No. 11/714,590, SECURING AND PARTITIONING DATA-IN-MOTION USING A COMMUNITY-OF-INTEREST KEY (Atty. Dkt. No. TN400.USCIP1), and U.S. Appl. Serial No. 11/714,666. (Atty. Dkt No. TN400.USOP2) entitled COMMUNICATING SPLIT PORTIONS OF A DATA SET ACROSS MULTIPLE DATA PATHS, and U.S. Appl. Serial No. 11/714.598 (Atty. Dkt No. TN400.USCIP3) entitled GATEWAY FOR SECURING DATA TO/FROM A PRIVATE NETWORK, all filed on March 6, 2007. The content of the aforementioned applications are fully incorporated by reference herein.

### TECHNICAL FIELD

The present invention relates generally to computer network security, and more specifically, to securing data-in-motion (i.e., the transmission of data) associated with a multicast.

### BACKGROUND

The United States Department of Defense currently uses three separate networks to communicate information between users: (1) JWICS (Joint Worldwide Intelligence Communications Systems); (2) SIPRNet (Secret Internet Protocol Router Network); and (3) NIPRNet (the Non-secure Internet Protocol Router Network). Each of these networks is used to transmit different types of information based the level of security associated with the content of the information. That is, information that is deemed "top secret" may only be communicated or exist on the JWICS network. Information that is deemed "classlfied," up to and including information deemed secret, may only be communicated or exist on the SIPRNet or JWICS. Finally, information that is deemed unclassified may be present on the NIPRNet, SIPRNet, or JWICS. Additionally, access to the public Internet may only be obtained through the NIPRNet.

As separate and independent networks JWICS, NIPRNet, and SIPRNet operate in parallel. There is no inter-access between networks. Intermingling of data between networks is deemed a catastrophic security risk, as there-is a potential to gain access to either the top secret or classified information from a lower-level network or even the Internet, if the networks were physically interconnected. Accordingly, each network includes its own set of storage, routers, and end-user computer platforms operating in parallel.

One major downside with having three separate and parallel networks are the increased costs associated with thrice duplicating the overhead of three parallel systems. Accordingly, the U.S. Department of Defense spends a substantial amount of money to design, deploy, manage and maintain a parallel network infrastructure. The three separate networks are designed to maximize security by reducing vulnerabilities associated with there being potential access to a high-security-level network from one or more lower-security-level networks or from public networks (e.g., the Intemet).

Furthermore, having three sets of independent networks presents logistical problems and inconveniences. For example, in order for the end-user to communicate with each network simultaneously, the end-user may have to use more than one computer platform. For example, an individual with a "top secret" security level clearance typically has three separate computers operating on his/her desk to communicate on each network. To accomplish tasks, it is often necessary for higher-clearance personnel to constantly switch back and forth between multiple computer platforms. This need to switch between computer platforms and networks according to security level is time consuming, tedious, and unproductive.

Furthermore, when high-clearance personnel deploy in a combat zone, such personnel have the burden of accessing three separate networks through multiple computer platforms, which must be transported to the combat zone. In a combat environment, this requirement presents a logistical burden, requiring the transportation of redundant sets of hardware to a site, along with additional personnel to handle the demand of administering and often deploying triplicate sets of equipment.

While the above example is directed to security levels in the Department of Defense, separation of networks is common in other organizations. For instance, commercial companies may separate networks within their organization according to groups, known as "communities-of-interest." A community-of-interest is a group of people who share a common interest and are therefore grouped together based on their common interest. Examples of different communities-of-interest in a company may include human resources, payroll, executive management, engineering, marketing, and sales. Communities-of-interest may be classified in other organizations including, government organizations, non-commercial enterprises, and various other organizations. For example, each security level in the U.S. Department of Defense is a specific type of community-of-interest, but there are likely many different subtypes of communities-of-interest in the Department of Defense.

Security is maintained in organizations by segregating networks used by each community-of-interest to restrict access to data available on computers and databases used in such networks. For example, this prevents someone in engineering from gaining access to data used in the payroll department's network and visa versa. While separate local network infrastructures help to maintain security of data in association with each community-of-interest, superfluous equipment and maintenance is required to maintain these segregated networks. This adds expense, and complexity to the data infrastructures of such organizations.

Regardless of the organizational structure of networks used in commercial, governmental, and other settings, there is an ever increasing security concern that sensitive data transmitted or stored on local networks will be accessed by an unauthorized individual or accidentally accessed or disclosed outside of a community-of-interest, hence compromising the secret data.

There are a number of security safeguards in place today to help prevent against unauthorized access or disclosure of sensitive network data. Common technologies used to protect access to network data include passwords, biometric authentication, and data encryption.

Briefly, passwords are words or characters that a user typically has to type into a system and then be recognized by the system before the user is provided access to a computer system or data stored on the computer system. A problem with passwords is that they are stored in files on the computer system that may be susceptible to breach through sophisticated hackers and thieves. Additional, passwords are inherently unreliable, because once they are acquired by whatever means, they provide immediate access to a computer system and potentially network data accessible to the computer system.

Biometric authentication security is often seen as a more secure way to provide access to a computer system than passwords, because it is viewed as being unique to an individual and cannot be easily copied. Biometric authentication security involves measuring and analyzing at least one human physical characteristic for authentication before allowing access to a computer system. Examples of physical characteristics include fingerprints, eye retinas, eye irises, facial patterns, and hand measurements.

Biometric authentication security systems help to protect against unauthorized access to a computer system, however, there is an increased worry that these security systems can be faked out through deception. Deception methods include well-made copies of fingerprints, masks, or contact lenses that replicate iris patterns, which all may be used to defeat these systems.

Additionally, such systems do not protect data, especially plaintext data that is readable by most common software applications once the plaintext data is transmitted over a network or stored in a file. As mentioned above, most networks are physically connected in some fashion and transmit data across the Internee or one or more private networks. When data is transmitted across a network, referred to as "data in motion," the data is vulnerable to being viewed by an unauthorized individual.

Data encryption is a technique used to transform (encrypt) data into a form that it cannot be read except by the computer system for whom the data is intended through a retransformation process of the encrypted data back into its original format prior to being transformed. This retransformation process is known as decryption. Data encryption involves the use of keys, which are data strings, which when combined with actual data being stored or transmitted, produces a transformed data string which appears to be unreadable until decrypted. Data decryption likewise involves the use of corresponding keys, which are used to decrypt (decipher) and retransform the data back to its original format so the actual data can be read and understood.

A problem with data encryption is that keys, like passwords, are copied or their codes (e.g., procedures) for producing data strings to encrypt and obscure the data, or decrypt the data are learned, then it is possible to gain access to and decipher encrypted data. With potential access to passwords, keys, and the breaking of codes, it is possible to view secret or private data when the data is in motion.

To understand the encryption problem in more detail, it is helpful to understand a common encryption technique presently in use to prevent the stealing of data in motion, known as SSL (Secure Socket Layer). SSL is a transport level technology, typically for encryption of data between a Web server and a Web Browser. For example, suppose a user of a Web browser purchases a product from a website. The data sent by the user to the website (such as address, credit card, and other private information), is typically communicated using SSL to protect the data.

SSL relies on Public Key Infrastructure (PKI) for is cryptographic key management. PKI-based encryption technology utilizes pairs of encryption/decryption keys. Pairs of these keys are related mathematically. When a portion of data is encrypted with one of the keys, such as example key A1, it can only be decrypted by its pair, A2. Likewise, if A2 is used to encrypt some data, only A1 can decrypt it.

This relationship between keys A1 and A2 means that one of the keys, say A1, can be made public while the other key, A2, is kept private. So, if user "Bob" (Bob, Alice, Bill, and Charlie are common names used in the computer security field to describe theoretical examples) wants to send a private message to "Alice" and guarantee that only Alice can read it, Bob will encrypt the message with Alice's public key A1. Alice then uses her private key (A2) to decrypt the message. Since A2 is kept secret by Alice, only she is supposed to be able to decrypt the message.

While SSL is useful for commercial browser-based applications, SSL is inefficient for high-volume transactional environments, especially when many distinct sessions (a secure communications dialog) must be established and then removed repeatedly. SSL is inefficient in higher-volume transactional environments because each time an SSL session is established, there must be an exchange of public keys prior to the start of the dialog. This associated processing overhead over a network can become burdensome for the network to handle.

Additionally, many methods provide access to SSL private keys stored in files through passwords, through snooping of network traffic such as when information concerning a private key may be transmitted over a network, or simply by being connected to a network in which it is possible to break into a computer system and gain access to keys stored in a file, such as by a Trojan program.

There are various other ways in which to protect data when it is transmitted over a network using cryptographic techniques. Another common approach is to use VPNs (Virtual Private Networks) to protect data in motion, especially data sent over a public network such as the internet. Most VPNs are used by organizations to establish communication between at least two private networks over a public network, or at least one end-user and a private network over a public network. Essentially, a VPN uses cryptographic tunneling protocols to provide the intended confidentiality to block snooping and packet sniffing of data in motion. VPNs also offer sender authentication to help block identity spoofing, and message integrity to block message alteration to further achieve privacy. When properly chosen, implemented, and used, such techniques attempt to provide secure communications over unsecured networks.

One drawback of VPNs in larger organizations is that while they attempt to protect data transmitted over a public network, VPNs do not provide any security for data in motion within the private network. This leaves data in motion in transit within a private network vulnerable to security threats that often originate from insiders. The insider may be a malicious attacker that gains access to data sent through the private network, usually before it is encrypted, through whatever illicit means are available ( such as a Trojan horse, copying of data from a server, etc). The insider may also be a non-malicious person that accidentally sends data to one or more people that were not intended to receive the data. For example, the individual may have only intended to send an e-mail (electronic mail) on a top secret network, but instead it was disseminated and read by individuals only having access on a classified network. If the data is in plaintext it can instantly be read by all users that inadvertently received the e-mail. So VPNs, and even strict physical segregation of network by classification level is no guarantee that data will be secure once it is in motion, especially within the exclusive domain of a private network.

The foregoing illustrates present logistical and security problems presently confronting different communities-of-interest including multi-level security networks such as the U.S. Department of Defense and other organizational structures. The foregoing also illustrates vulnerabilities of data-in-motion.

A further problem associated with securing and encrypting data involves how to secure Internet Protocol (IP) multicast data sent over a network to a group of receivers, usually consisting of more than one device. IP Multicast data involves transmission of IP datagrams (e.g. lossy packets or data) to a mulitcast address associated with a group interested receivers, such as endpoint workstations. Presently, a range of addresses, 224.0.0.0 to 239.255.255.255, are designated as multicast addresses. A sender of the datagrams sends a single datagram (from the sender's unicast address) to the multicast address, and routers in the network make copies, and send them to receivers who registered their interest in data from that sender. The primarily impetus behind a multicast is to conserve network bandwidth.

There are many complexities associated with an IP Multicast. For example, standard communication protocols are required to receive data or join a multicast. For example, a receiving member of a multicast group, called a receiver, receivers data corresponding to a particular multicast address, but must use Internet Group Management Protocol (IGMP) messages to join the group. Adjacent routers also use this protocol to communicate, as well as a router protocol, called Protocol Independent Multicast (PIM) to build distribution trees for transmitting multicast content, resulting in the most efficient delivery of data to multiple receivers.

Unicast packets (data flow) are delivered to a specific recipient on an Ethernet or IEEE 802.3 subnet by setting a specific layer 2 MAC address on the Ethernet packet address. Broadcast packets make use of a broadcast MAC address (FF:FF:FF:FF:FF:FF), which includes setting the broadcast/multicast bit in the address. Multicast packets are delivered by using the Ethernet MAC address range 01:00:5e:00,00:00 - 01:00:5e:7f:ff:ff, which includes 23 bits of available address space. The first octet (01) includes the broadcast/multicast bit. The lower 23 bits of the 28-bit multicast IP address are mapped into the 23 bits of available Ethernet address space. This means that there is ambiguity in delivering packets. If two hosts on the same subnet each subscribe to a different multicast group whose address differs only in the first 5 bits, Ethernet packets for both multicast groups will be delivered to both hosts, requiring the network software in the hosts to discard the unrequired packets.

For IPv6 Multicast addresses, the Ethernet MAC is derived by the four low-order octets OR'ed with the MAC 33:33:00:00:00:00, so for example the IPv6 address FF02:DEAD:BEEF::1:3 would map to the Ethernet MAC address 33:33:00:01:00:03.

Presently, there are techniques used to protect multicast content, including the use of filters, access control mechanisms, and encryption. For example, filters are used to ensure that data streams are sent only to legitimate receivers and requesting routers. But filters do not protect the data while it is motion.

Access control mechanisms include lists in routers that are used to prevent certain users from receiving multicasts from routers. But these control mechanisms are easily defeated if any end-user is able to be added to a list, or masquerade as a legitimate end-user. In any event, access control mechanisms also fail to protect the multicast data when in motion.

Encryption is available to secure content of a multicast in motion, but suffers from the problems described above with respect to unicast data.

So, given the present logistical and security problems presently confronting different communities-of-interest including multi-level security networks such as the U.S. Department of Defense and other organizational structures - the question is: How to better secure data associated with a multicast, including securing the data associated with establishing or joining a multicast, as well as securing content of a multicast? Additionally, how is it possible to better protect data of a multicast while in motion (i.e., transported over a network) given the vulnerabilities as described above?

### SUMMARY

Described herein are systems and methods for securing multicast data. As used herein the term "multicast" or "IP multicast" refers to the delivery of data to a group of one or more endpoints simultaneously.

In accordance with one embodiment of the invention, data of a multicast, like unicast data, is protected through the use of double encryption keys, such as a community-of-interest key and session key. Data of a multicast is also split into portions of multicast in accordance with the session key, and transmitted over a choice of different pathways to the group of one or more endpoints.

The community-of-interest key is a prerequisite to joining or requesting delivery of a particular multicast, and is used to initialize and exchange a session key. Whereas, the session key is used to cryptographically split data of the mulitcast into portions of the mulitcast, and each portion is transported over a choice of multiple separate data paths, referred to as tunnels, to one or more destinations.

In one high security implementation, tunnels are a set of communication paths between pairs of endpoints (unicast), or groups of endpoints (mulicast). Each point-to-point communication path has a unique bidirectional encryption characteristic, i.e., an encryption key for each direction, and a starting value for a random number generator. A set of values is unique for each pair of endpoints that desire to communicate with each other. So, for each tunnel established, there are unique session keys that are generated. And the community-of-interest keys are used to initialize and exchange those session keys.

In one embodiment, all endpoints in a particular multicast group share the same session keys values. Therefore, endpoints that join a group (tune-in) must be notified of the session keys that are being used by the group at that particular time. To join a group a requester typically sends a multicast join message to a known multicast address in a range of addresses. From the perspective of the requester, the protocol used by an endpoint to join a group is the Internet Group Management Protocol or IGMP, having an associated address with the request.

So, all endpoints that are members of these addresses in the network, receive the request. The request to join is parsed and split-up, by first establishing a unicast tunnel. That is, the join message is parsed using a community-of-interest key that contains a session key that is to be used thereafter to restore packets associated with the request of addresses. Any devices listening on those addresses will receive the request, and start a timer.

Most devices that are part of a group may be configured not to respond to the request to avoid flooding the network. Rather, only one device that is part of the group may be tasked with reply (with the earliest timer alarm), usually with the present session key being used by the group.

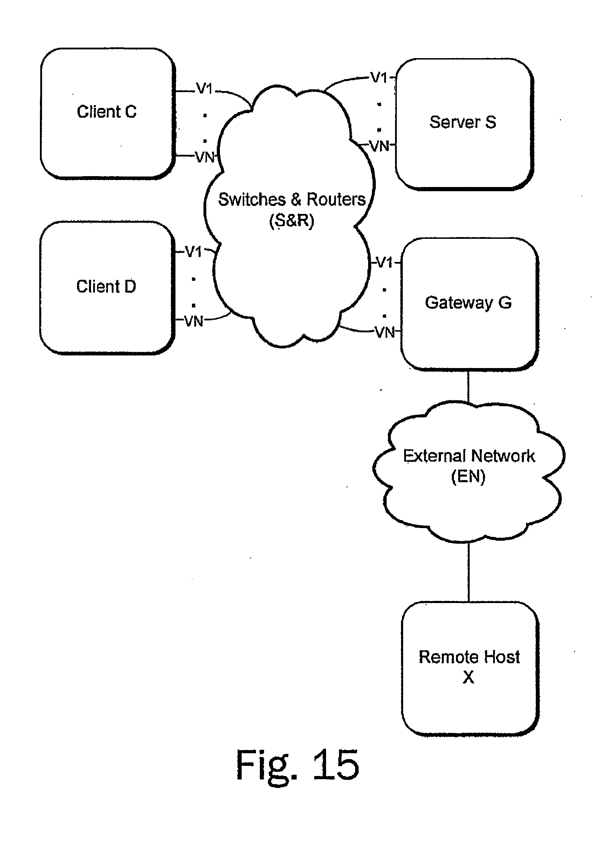

In one embodiment, a gateway to and from a private network, serves as the keeper of all session keys, and will always respond to an endpoint device request to join a multicast. Since the gateway communicates with any external routers, the gateway acts as an intermediary between endpoints in a secure network and any external routers, such as a remote host (see Fig. 15). In one embodiment, to ensure that the gateway is the first to respond to anyone request to join a multicast, the gateway's timer is set to zero.

In one embodiment, the community-of-interest keys will be reused by the gateway device and device with access to the multicast, but session keys are randomly generated per multicast, and at any particular time during a multicast session. That is, unique session keys are generated and used for each group instance. So, much effort is spent initializing and exchanging session keys with new corners to a group. Thereafter, packets of the multicast are cryptographically split as with unicast packets.

As mentioned above, a "Join" request is usually sent to an Ethernet address group. That address, is mapped to a community-of-interest of N IP addresses corresponding to each tunnel associated with the community-of-interest for the multicast. That is, the session key is used to cryptographically split data of the multicast, into portions of the mulitcast, and each portion of the mulitcast is transported over a choice of N multiple separate data paths, referred to as tunnels, to one or more destinations. The Ethernet address associated with the multicast is mapped to each of the N IP addresses corresponding to each VLAN associated with the community-of-interest for the muliticast.

Additional exemplary implementations and features/advantages are described in the Detailed Description in conjunction with the accompanying drawings below. The scope of the invention is recited in the Claims or equivalents thereto.

### BRIEF DESCRIPTION OF THE DRAININGS

The detailed description is explained with reference to the accompanying figures. In the figures, the left-most digit(s) of a reference number identifies the figure in which the reference number first appears. It should be noted that the figures are not necessarily drawn to scale and are for illustration purposes only.
Fig. 1 shows a conventional network configuration for an organization.
Fig. 2A shows and organization in which each separate intranet (e.g., private network) of Fig. 1 is consolidated into a single interconnected infrastructure.
Fig. 2B is a chart illustrating end-users and their membership denoted by an "X" to different communities-of-interest of a small subset of an example larger organization.
Fig. 3 illustrates an example logical computing environment in which a key-encryption key (e.g. community-of-interest key) is used to encrypt a cryptographic data set transferred from a first computing device to a second computing device in an organization.
Fig. 4 illustrates an example logical computing environment in which a cryptographic data set is used to encrypt a message transferred from a first computing device to a second computing device in organization.
Fig. 5 illustrates a computing device within which the present invention can be either fully or partially implemented.
Fig. 6 illustrates an exemplary method for securely transmitting a cryptographic data set among logically partitioned data paths.
Fig. 7 illustrates an exemplary method for securely transmitting a message among logically partitioned data paths.
Fig. 8 shows a logical illustration of a message transmitted from a computing device within a private network destined to a computing device outside of the private network.
Fig. 9 shows a logical illustration of a message transmitted from a computing device in another network destined for a computing device within the private network.
Fig. 10 illustrates an exemplary method for transmitting a message destined for another network via a gateway.
Fig. 11 illustrates an overall logical flow of how an original packet is containing a cryptographic data set, or message, is concatenated with pre-header and then split into portions which are appended with an IP header containing an ID value indicating which set of data the portion belongs.
Fig. 12 shows a graphical logical relationship between areas of a network.
Fig. 13 shows a graphical logical relationship example of areas within a network.
Fig. 14 shows a more complex network implementation with multiple areas.
Fig. 15 shows an exemplary network used to describe unicast as well as multicast processing scenarios below.
Figs. 16A-16D is a ladder diagram representing different stages of unicast processing.
Figs. 17A-17E illustrates common packet handling scenarios for multicast data according to one embodiment of the invention.
Fig. 18 is a multicast address mapping diagram.
Fig. 19 is another derivation diagram for deriving multicast addresses.

### DETAILED DESCRIPTION

### Introduction

Reference herein to "one embodiment", "an embodiment", "an implementation" or "one implementation" or similar formulations herein, means that a particular feature, structure, operation, or characteristic described in connection with the embodiment, is included in at least one embodiment of the present invention. Thus, the appearances of such phrases or formulations herein are not necessarily all referring to the same embodiment. Furthermore, various particular features, structures, operations, or characteristics may be combined in any suitable manner in one or more embodiments.

In the following description, for purposes of explanation, specific numbers, materials and configurations are set forth in order to provide a thorough understanding of the present invention. However, it will be apparent to one skilled in the art that the present invention may be practiced without each specific example. In other instances, well-known features are omitted or simplified to clarify the description of the exemplary embodiments of the present invention, and thereby, to better explain the present invention.

The inventors intend these embodiments and implementations to serve as representative illustration and examples. The inventors do not intend these embodiments to limit the scope of the claims including all possible equivalent elements therein; rather, the inventors have contemplated that the claimed invention might also be embodied and implemented in other ways, in conjunction with other present or future technologies.

### Exemplary Consolidation of Networks

Implementing multiple parallel intranet networks in an organization, such as the U.S. Department of Defense, commercial enterprises, or other entities, is fraught with problems as described in the Background section above. There are high costs associated with purchasing, managing, and maintaining the necessary equipment for each network, but there are also intangible costs of losses in productivity for personnel that deal with using two, three or more workstations (in the case of the Dept. of Defense) to access information from parallel networks according to different classification levels of the security.

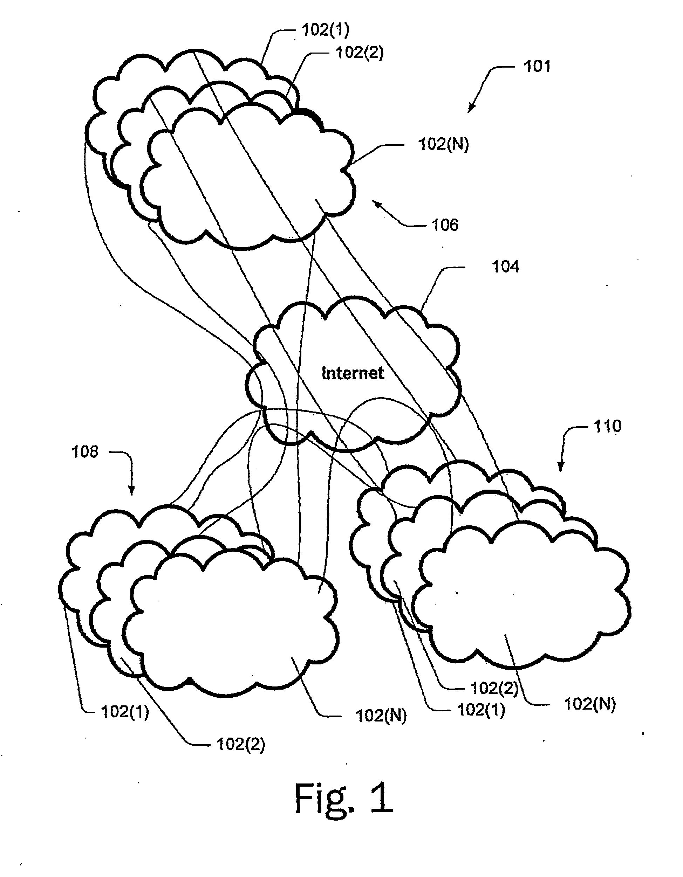

For example, Fig. 1 shows a conventional network configuration for an organization **101.** Physically separate and parallel network infrastructures, i.e., intranets **102**(1), **102**(2),...**102**(N) are used at each site (designated **106, 108,** and **110**) of organization **101** for transportation of data. Further, each intranet **102** of organization **101** relies on the Internet **104** as a backbone for transmitting data between separate sites **106, 108,** and **110.**

Organization **101** may be a non-commercial or commercial entity, including, but not limited to any government agency or corporation. Whereas each intranet **102**(1), **102**(2), ..., **102**(N) may represent a separate security level, such as, but not limited to, the U.S. Dept. of Defense's JWICS, SIPRNet, or NIPRNet. Each intranet **102** may also represent a different workgroup (e.g., community-of-interest) within an organization.

In contrast, Fag. 2 shows organization **101** in which each separate intranet **102**(1), **102**(2), ...., **102**(N) of Fig. 1 is consolidated into a single interconnected intranet in accordance with the present invention. Instead data is separated in organization **101** through virtual separation of data. To end-users, it appears that organization **101** may have separate physical intranets for separating different groups or security levels within an organization. In reality data transported through organization **101** is parsed and partitioned using one or more systems and methods of the invention. Such systems and methods help prevent an unauthorized computing device from acquiring data that it is not authorized to receive. However, even if an unauthorized computing device does receive data it is not authorized to receive, the systems and methods of this invention render the content of the data unintelligible to the receiving device.

As a result of implementing the systems and methods of the invention, it is possible to consolidate physically partitioned separate intranet networks of different sites shown in Fig. 1, into a single intranet that share the same physical network infrastructures but are able to secure and partition data according to a data's classification, e.g., a security level associated with the data, or more broadly, its association within a particular community-of-interest.

As mentioned above a community-of-interest refers generally to a group of two or more people who share a common interest and are grouped together based on their common interest. A community-of-interest may correspond to a role of an individual in an organization, a job level, security level, or may correspond to some other characteristic. A community-of-interest may also correspond to some subject defined by an organization or an individual and associated with one or more individuals (i.e., end-users of a computing device). A community-of-interest may be defined differently depending on the organizational structure of the entity.

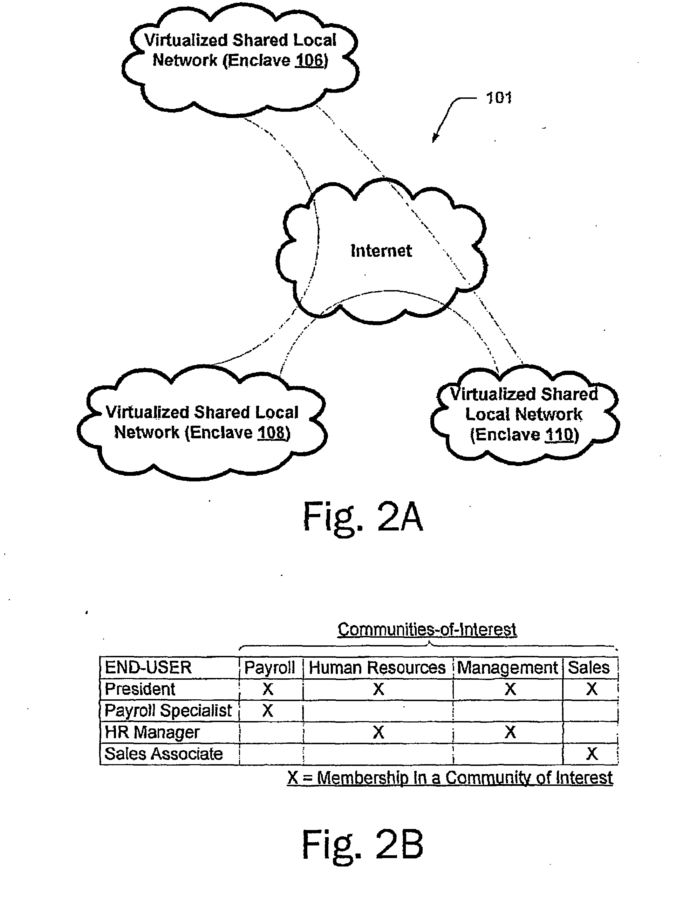

Thus, rather than have physically separate and parallel intranets networks per enclave **106, 108,** and **110,** to support each security level, separately, as shown in Fig. 1, the present invention permits the integration and consolidation of parallel network infrastructures as shown in Fig. 2A, through a virtual separation of data based on the classification of the data, such as its membership within one or more communities-of-interest.

As will become more apparent, this invention facilitates security and separation of data for many possible communities-of-interest supported by an organization **101,** which are well beyond the limited separate security levels presently supported by the U.S. Department of Defense JWICS, SIPRNet, and NIPRNet.

In one embodiment, consolidation of multiple parallel networks into virtualized communities-of-interest as shown in Fig. 2A is accomplished by physically separating each data set into split portions of data (data shares) which are encrypted and sent over more than one data path to reach a destination in organization **101.** A larger data set, such as a message, cannot be decrypted (reassembled) without knowledge of a data encryption key used to encrypt the portions of data when sent to its destination.

Furthermore, the data encryption key used to encrypt each portion of data is also encrypted by a key-encryption key, referred to herein as a "community-of-interest key" which corresponds to a community-of-interest for which the data set is classified or corresponds to an end-user of a computing device sending the data set is classified. The data encryption key referred to herein as a cryptographic data set is also divided into split portions of a cryptographic data set (shares of data) which are encrypted by the community-of-interest key and sent over more than one data path to reach a destination in organization **101.** So, the data encryption (e.g., key cryptographic data set) used to encrypt the data cannot be decrypted unless the computing device which receives the portions of the data has possession of a corresponding community-of-interest key to decrypt the separate portions of the data encryption key (cryptographic data set).

### Communlty-of-Interest Paradigm

The systems and methods of this invention may be implemented in any network environment in which it is desired to increase security of data-in-motion based on community-of-interests of end-users. As explained above security threats also often originate from insiders. Whether the threat is intentional or unintentional, transmitting data exclusively in one security level partitioned network or another does not protect the data if it is in plaintext format. For example take a non-malicious threat, suppose that data is accidentally sent from one user having a top secret security clearance level to many individuals having only a classified level on a classified network. The individual may have only intended to send the message on the top secret network, but instead it was disseminated and read by individuals only having access to the classified network. If the data is in plaintext it can instantly be read by all users on the classified network that inadvertently received the message. Thus, even strict physical segregation of network by classification level or by community-of-interest is no guarantee that data will not be disseminated to end-users outside a classification level or a community of interest.

To solve this problem, in one embodiment, it is possible to deploy (install) community-of-interest keys (to be explained in more detail) on end-user computers within the U.S. Department of Defense multilevel security system with different community-of-interest keys associated with each level of defense for maintaining and accessing data on each of the networks, such as a different community-of-interest key for JWICS, SIPRNet, and NIPRNet.

In another embodiment, it is possible to install community-of-interest keys on end-user computers based on the end-user's membership within a community-of-interest. For instance, Fig. 2B is a chart illustrating end-users and their membership denoted by an "X" to different communities-of-interest of a small subset of an example organization. In this condensed example, a President of an organization, given his/her position, is entitled to access data in all of the communities-of-interest. On the other hand, a Payroll Specialist whose role may be limited to only issuing paychecks can only view or share data associated with the payroll community-of-interest and no other communities-of-interest. An HR (Human Resources) Manager given his/her position in HR as well as being a manager may view or share data from both the HR and Management communities-of-interest. Finally, in this example, a Sales Associate is only able to view data from or share data with others associated with the Sales community-of-interest.

Normally, each community-of-interest would be partitioned in some fashion, and use some type of separate network infrastructures or other partitions per community of interest. Through the use of community-of-interest keys it is possible to separate and secure data according to each community-of-interest using the same physical network platforms to transmit and store data. In the example of Fig. 2B, while the President can access data in all four communities-of-interest, the President cannot share data with the Payroll Specialist if the data the President sends to the Payroll Specialist is encrypted using a community-of-interest key that the Payroll Specialist does not posses on his/her computer. That is, no communication session can be established between the President the Payroll Specialist other than with the Payroll community-of-interest key, and therefore the message with a community-of-interest key not recognized by the computer of the Payroll Specialist cannot be sent to the Payroll Specialist. Even if the message is accidentally received by the Payroll Specialist, the Payroll Specialist cannot decrypt the session key (e.g., configuration data set) used to encrypt the message. This safeguard prevents inadvertent or malicious/intentional dissemination of plaintext data to individual who are not members of a particular community-of-interest, and therefore, are not authorized to receive such information.

It is possible to distribute community-of-interest keys within departments, groups, agencies, different offices of an entity, based on ranks of individuals, security level ratings of individuals, commercial/non-cammercial entities, govemmental/non-governmental entities, corporations, or just about any group. It is also possible to dynamically create a community-of-interest or revoke a community of interest by the dissemination or removal of community-of-interest keys.

Thus, in accordance with one embodiment, each individual (or end-user) associated with an organization has one or more community-of-interest keys installed on their computers, which is a secret encryption and/or decryption key previously installed thereon as a set of code or logic on a computer. Only computer devices with matching community-of-interest keys can communicate with one another, or observe data classified within their community-of-interest. That is, each community-of-interest key is associated with an end-user's community-of-interest (such as a position in a company or a security level), thereby allowing only end-users within the same group and having at least the same community-of-interest key to communicate with each other, or to gain access to data associated with that community-of-interest.

Or course, multiple community-of-interest keys can be distributed to individuals based their membership and roles. It is conceivable that select end-users in each community-of-interest, may have more access to certain data, while others may have less ability to view or share data. The methods of this invention using communities-of-interest keys allows for the sharing or accessing of data to end-users whose computers have been preconfigured with appropriate community-of-interest keys.

Community-of-Interest keys may also be installed on servers or other platforms within a network to protect sensitive data. Servers dedicated to a particular community-of-interest may only communicate with computing devices that have the same requisite community-of-interest keys installed therein. Otherwise no communication session can be established between a computing device and a server without both devices having the requisite key(s).

Although some embodiments described herein may generally refer to he currently used U.S. Department of Defense multilevel security network architectures, including the JWICS (Joint Worldwide Intelligence Communications Systems), SIPRNet (Secret Internet Protocol Router Network), and NIPRNet (the Non-secure Internet Protocol Router Network) multi-level security network systems, it is appreciated by those skilled in the art having the benefit of this disclosure that the innovative techniques herein are not limited to U.S. Department of Defense networks, and may be applied to other networks having different security levels or communities-of-interest for accessing and maintaining data.

### Exemplary Cammunity-of-lnterest Keys, Tunnels and Splitting of Data

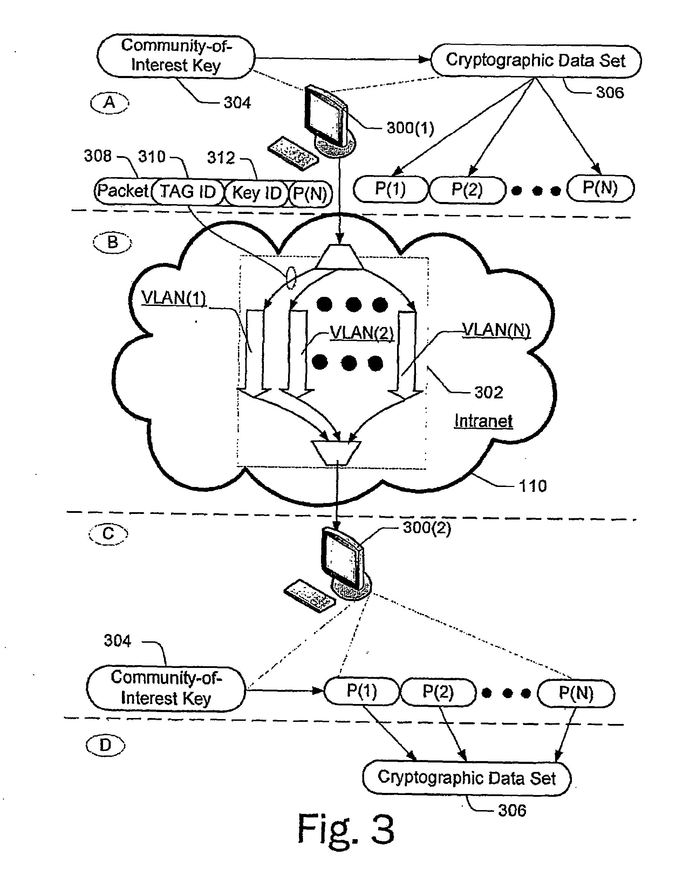

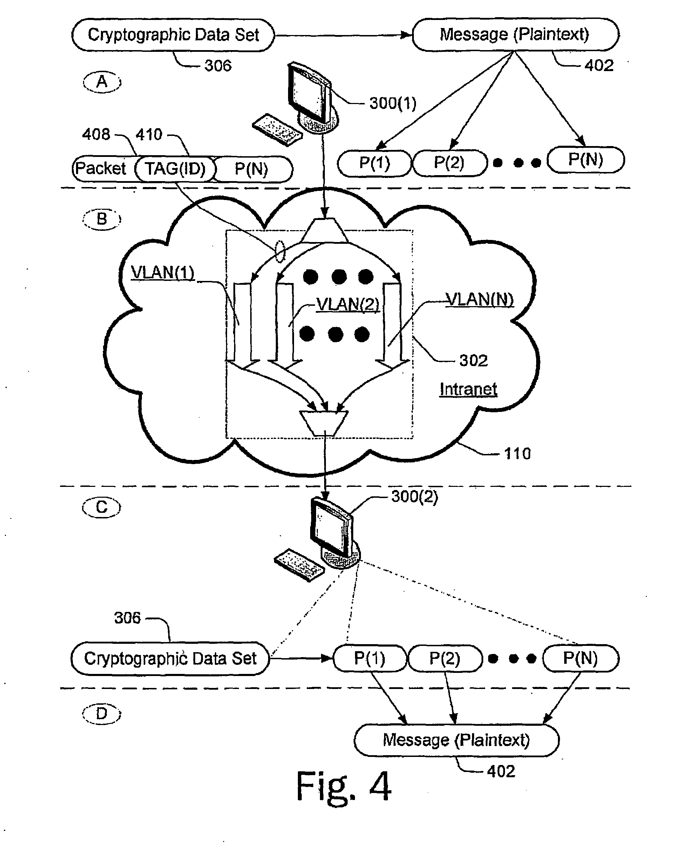

The aforementioned splitting of data into portions using a community-of-interest key and data encryption key are shown in Figs. 3 and 4. In particular, Fig. 3 illustrates an example logical computing environment in which a key-encryption key (e.g. community-of-interest key) is used to encrypt a cryptographic data set transferred from a first computing device to a second computing device in organization **101.** Whereas, Fig. 4 illustrates an example logical computing environment in which a cryptographic data set is used to encrypt a message transferred from a first computing device to a second computing device in organization **101.** Thus, Figs. 3 and 4 correspond to a two-step process used to facilitate the ultimate transfer of a message from a first computing device to a second computing device in organization **101.**

A "message" refers generally to any set of data sent from one node to another node in a network. A message may include different forms of data usually in some form of a payload. A message may be an e-mail, a video stream, pictures, text documents, word processing documents, web-based content, instant messages, and various other forms of data that when in "plaintext," or clear form, may reveal confidential and sensitive information. In most instances, this invention is concerned with securing data-in-motion, or in other words, cryptographic data or messages sent from one node to another node such as data traveling from one location to another within one or more networks which may include the Internet.

Referring to Figs. 3 and 4, computing devices **300** are workstations within organization **101.** However, as appreciated by those skilled in the art having the benefit of this disclosure, computing device **300** may by other types of computing devices, such as a personal computer, a mobile computer, a server, a gateway device, or other computing device capable of sending and receiving data over a communication link (wired or wireless link).

In one exemplary embodiment, intranet **110** is a LAN (Local Area Network), but as would be appreciated by those skilled in the art having the benefit of this disclosure, may be other private network configurations such as a PAN (personal area network), CAN (campus area network), or an interconnected combination of one or more of the aforementioned networks.

Intranet **110** includes a switching fabric **302** that may include multiple switches as Well as one or more routers, collectively shown as block **302,** Switching fabric **302** also may include other devices such as one or more servers.

Each endpoint in network **110,** such as computing device **300**(1), 300(2), has one or more sets of cryptographic code installed therein (to be described) which ensure that a set of data transferred by switching fabric **302** of network **110** is physically separated into multiple shares, wherein each share is a portion of the larger set of data.

Once separated into portions of data, each portion may be intermixed with other data, such as from other portions of data comprising one or more different sets of data, obfuscation data, and/or various other bits of information. To intermix portions of data sent, typically different data communication paths through switching fabric **302** are selected for transporting different intermixed portions of data to the receiving computing device **300**(2). Each of the different paths for transporting the intermixed portions of data are physically and/or logically partitioned from each other. Only when the data arrives at its destination, e.g., computing device **300**(2), is it able to be reassembled.

Splitting-up data into various bit portions, mixing such data, and then transporting the mixed portions of data over multiple paths, reduces the amount of usable data that can be obtained from any one computing device, in the event there is an unauthorized connection to switching fabric **302,** That is, as data travels from any one computing device **300** it is divided into data portions (any bit or collection of bits in length), mixed with other portions of data that is unrelated or out-of-order, and transported over different traffic paths. Thus, to view recognizable data in the system requires viewing all the data portions across the entire system. Various encryption techniques and keys may also be used in conjunction with innovative systems and methods described herein to increase security.

Any number of suitable communication protocols may be used to communicate between computing device **300**(1) and computing device **300**(2). For example, a combination of standard protocols such as HyperText Transport Protocol over Secure Sockets Layer (HTTPS) and lower-level (network layer and below) packet encryption, such as IP-Sec tunneling, may be used to communicate between different endpoints in network **110.**

In one embodiment, with reference to Figs 3 and 4, the data paths between computing device **300**(1) and **300**(2) are logical connections in the form of multiple VLAN, such as VLAN(1), VLAN(2), ..., up to VLAN(N). Each VLAN (a virtual LAN) may include a collection of independent logical networks created within the physical network infrastructure of network **110,** and are typically selected by each end-point, such as computing devices **300**(1) and **300**(2)), using cryptographic configuration information. The quantity of VLANs used to transport data from one end-point to another can vary.

In one embodiment, the IEEE 802.1Q tagging protocol is used to control transportation of data from point-to-point. Each VLAN can operate at layer 2 (the data link layer) of the OSI model (Open Systems Interconnection Basic Reference Model). However, each VLAN can be configured to map directly to an IP network, or subnet, which may involve a layer 3 (the network layer) as well. It is possible that other suitable protocols may be used to transport data from point-to-point between end-points as would be appreciated by those skilled in the art, such as VLTs (Virtual LAN Trunks).

The general keys used to encrypt/decrypt other keys and messages shall now be described. A first key, referred to as a community-of-interest key **304** (Fig. 3) is used for encrypting/decrypting a second key (and other data), referred to as a cryptographic data set **306** (Fig. 3). The encryption, transportation, and decryption of the second key, e.g., cryptographic data set **306,** is shown in Fig. 3.

Whereas, cryptographic data set **306** (the second key), is generally used to encrypt/decrypt a message sent from computing device **300**(1) to computing device **300**(2) (Fig.4). The encryption, transportation, and decryption of a message are shown in Fig. 4.

In one embodiment, community-of-interest key **304** (Fig. 3) is a shared key installed on both computing devices **300**(1) and **300**(2) prior to a communication session to increase security, rather than receiving and generating the key on-the-fly during a communication session, in which the key can be intercepted. In an alternative embodiment, community-of-interest key **304** may be generated on-the-fly and transmitted to a target computing device **300**(2) during commencement of a communication session with a sending computing device **300**(1). In one embodiment, the second key, e.g., cryptographic data set **306** (Figs. 3 and 4), is randomly generated by computing device **300**(1), and sent to computing device **300**(2).

A logical methodology for how a message is sent from computing device **300**(1) to computing device **300**(2) shall now be described with reference to Figs. 3 and 4. In particular, referring initially to Fig. 3, in step A, a first key, referred to as community-of-interest key **304** is used to encrypt cryptographic data set **306.** That is, community-of-interest key **304** is used for transforming (encrypting) a cryptographic data set **306** (Step A), as well as for retransformation (decryption) of cryptographic data set **306** back to its original form (Step D). In one embodiment, community-of-interest key **304** is a shared key, that may be assigned to a computing device **300** of an end-user based on an associated community-of-interest attributed to the end-user. For instance, end-users of a computing device **300(**1) and **300**(2), may also have one or more community-of-interest keys **304** installed on their computing device, based on their position or security level within an organization.

It is also possible to secure and segregate messages based on a category of a community-of-interest associated with the message using a corresponding community-of-interest key **304** (e.g., cryptographic pairs).

In one particular embodiment, community-of interest key **304** encrypts cryptographic data set **306,** including splitting cryptographic data set **306** into portions P1, P2, ..., through P(N) (Fig. 3) in accordance with the community-of-interest key (Step A). Each portion may be any bit or collection of bits in length.

Then in Step B, the portions (P1 through PN) (Fig. 3) of cryptographic data set **306** are transported separately using community-of-interest key **304** to select different paths VLAN(1), VLAN(2),... VLAN(N) to transport portions of cryptographic data set **306** to computing device **300**(2). A tag **310** encapsulated within a portion of each packet **308** used to transport each portion (P1, P2, ..., or PN) of cryptographic data set **306** is used to select which data path (i.e., VLAN(1), VLAN(2),..., or VLAN(N)) (Fig. 3) is chosen to transport a particular portion (P1, P2, ..., or PN) of cryptographic data set **306** to computing device **300**(2).

Then, in Step C of Fig. 3, portions P1, P2, ...., through PN of cryptographic data set **306** are received by computing device **300**(2) and stored. Then in Step D of Fig. 3, cryptographic data set is reassembled by decrypting each of the encrypted portions P1, P2, etc. of cryptographic data set **306** using community-of-interest key **304.** Without access to community-of-interest key **304** by computing device **300**(2), it is extremely difficult to impossible for computing device **300**(2) to recover cryptographic data set **306.** And without cryptographic data set **306** it is extremely difficult to impossible to reconstruct message **402** (shown in Fig. 4).

Fig. 4 illustrates the transfer a message **402.** Referring to Fig. 4 in step A according to one embodiment, cryptographic data set **306** is used to encrypt message **402.** This includes splitting message **402** into portions of message **402** P(1), P(2), ..., through P(N). As used herein a portion of a message refers generally to a portion of a set of data (a message) sent from one node to another node in a network. It may include one or more bits of data comprising a larger set of data. Each portion of the message may be any bit or collection of bits in length.

In Step B, the portions (P1 through PN) (Fig. 4) of message **402** are transported separately using cryptographic data set **306** to select different paths VLAN(1), VLAN(2),... VLAN(N) to transport portions of message **402** to computing device **300**(2). A tag **410** encapsulated within a portion of each packet **408** used to transport each portion (P1, P2, ..., or PN) of message **402** is used to select which data path (i.e., VLAN(1), VLAN(2), ...., or VLAN(N)) is selected to transport a particular portion (P1, P2, ..., or PN) of message **402** to computing device **300**(2). Each packet **408** may be intermixed with packets containing portions of data unrelated to message **402** or out-of-order with respect to message **402.** In Step C, portions P1, P2, ...., through PN of message **402** are received by computing device **300**(2) and stored. Then in Step D, message **402** is reassembled by decrypting each of the encrypted portions P1, P2, etc. of message **402,** using the cryptographic data set **306** reconstructed as described above with reference to Fig. 3.

Although cryptographic data set **306** and message **402** are split into portions and communicated over multiple and separate point-to-point connections with reference to Figs. 3 and 4, it is possible that portions may be transmitted over a single data path in a serial fashion to an end-point in an alternative embodiment. In such a scenario, the portions may be sent out-of order or mixed with other data.

### Exemplary Computing Device Platform

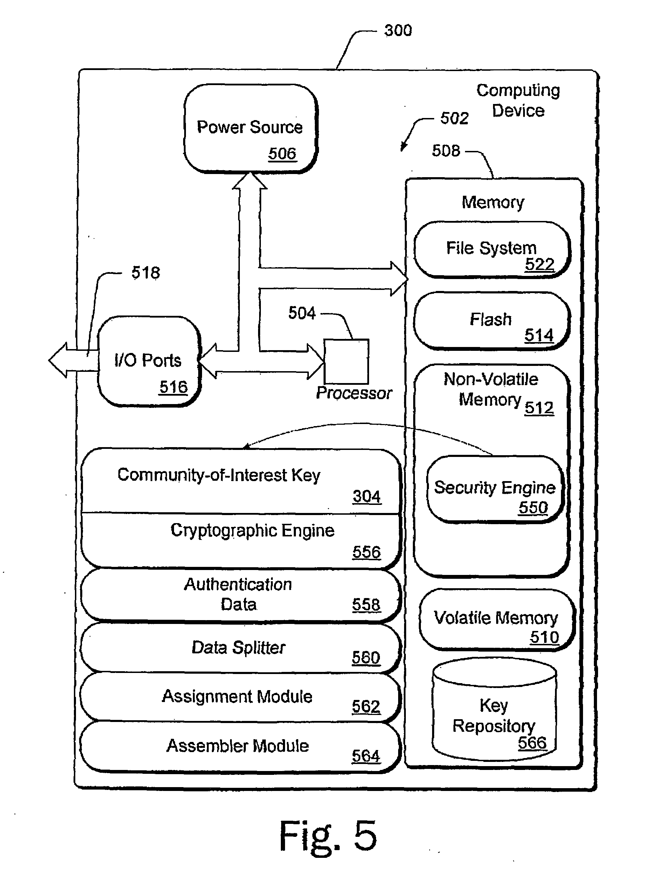

Fig. 5 illustrates computing device **300** within which the present invention can be either fully or partially implemented. In one possible embodiment, computing device **300** is implemented as a personal computer. Although some of the discussion below will focus on end-user equipment such as personal computers, the applicability of the present invention is not limited to end-user equipment, and may be used with other computing devices within a network. For example, computing device **300** may be other general or special purpose computing devices, such as, but not limited to, gateways, servers, routers, workstations, mobile devices (e.g., PDA, cellular phone, etc.), and a combination of any of the above example devices, and other suitable intelligent devices.

Computing device **300** includes a controller **502** including at least one processor **504,** a power source **506,** and memory **508.** Memory **508** may include volatile memory (e.g., RAM) **510** and/or non-volatile memory (e.g., ROM) **512.** In some implementations, volatile memory **510** is used as part of the computing device's cache, permitting application code and/or data to be accessed quickly and executed by processor **504.** Memory **508** may also include non-volatile memory in the form of flash memory **514.** It is also possible for other memory mediums (not shown) having various physical properties to be included as part of computing device **300.**

A file system **522** may reside as a component in the form of computer-executable instructions and/or logic within memory **508,** that when executed serves as a logical interface between code stored in flash **514** and other storage mediums. File system **522** is generally responsible for performing transactions on behalf of code stored in ROM or one or more applications. File system **522** may also assist in storing, retrieving, organizing files, and performing other related tasks associated with code and/or data. That is, file system **522** has the ability to read, write, erase, and manage files (applications, etc.). File system **522** may also include other applications such as web browsers, e-mail, applications, and other applications.

Computing device **300** may also include one or more Input/Output ports **516** to transmit and/or receive data. I/O ports **516** are typically connected in some fashion to controller **502** (processor **502** and memory **508**). I/O ports **516** are usually at least partially implemented in hardware for connecting computing device **300** to a communication link **518,** and may include wired as well as wireless capabilities. Communication link **518** may include any suitable connection means for handling the transportation of data to and from computing device **300,** such as, but not limited to, cable, fiber optics, and wireless technology. Communication link **518** may also include network technology including portions of the internet.

Stored within one or more portions of memory **508** is a security engine **550.** That is, security engine **550** includes one or more sets of computer-executable code resident in a computer-readable medium such as memory **508.** Security engine **550** performs security functions associated with transmitting, receiving, or storing data. These security functions may include encrypting data and decrypting data. Typically, cryptographic corresponding key pairs are installed in memory, such as an encryption key and decryption keys. However, it is appreciated that a corresponding cryptographic key may reside on another computing device. The keys may be public or private as would be appreciated by those skilled in the art. The keys may be generated using commercially available products or proprietary technology.

In one embodiment, security engine **550** includes one or more community-of-interest keys **304,** which are private and secret keys used for encrypting/decrypting other security keys in accordance with this invention. That is, community-of-interest keys **304** are used for transformation (encryption) of a second key (or additional keys), such as a session key, into a cryptographically split-up key, as well as for retransformation (decryption) of the second key back to its usable form.

A community-of-interest key **304** refers generally to an encryption key and/or corresponding decryption key, that may be assigned to a computing device **300** of an end-user based on an associated community-of-interest attributed to the end-user. For instance, end-users of a computing device **300,** may also have one or more community-of-interest keys **304** installed on their computing device, based on their position or security level within an organization.

It is also possible to secure and segregate messages based on a category of a community-of-interest associated with the message using a corresponding community-of-interest key **304** (e.g., cryptographic pairs). Also, unlike private/public key pairs, community-of-interest keys **304** are usually installed or generated before a transaction to increase security, rather than receiving and generating the key on-the-fly during a transaction, in which the key can be intercepted.

Community-of-interest keys **304** may be stored in a key repository **566,** which is a storage area in memory **508.** An identifier value corresponding to each community-of-interest key **304,** such as a community-of-interest key identifier **312** (Fig. 3), may also be stored in key repository **566.** Identifier **312** allows security engine **550** to call a particular key for encrypting or decrypting a cryptographic data set. Each identifier **312** may be sent as part of a packet header (see Fig. 3), such as to initiate a communication session with another computing device to enable the receiving device to call the corresponding community-of-interest key to decrypt a particular cryptographic data set.

Security engine **550** may include a cryptographic engine **556** for generating cryptographic keys and other information used to encrypt or decrypt messages, as well as route data to a target device. In one embodiment, cryptographic engine **556** generates a cryptographic data set **306** (Figs. 3 and 4), which may include one or more session keys which are used for encrypting/decrypting one message or a group of messages when computing device **300** is in a communication session with another device. Cryptographic data set **306** may also generate information used for routing data among different data paths in a network.

Cryptographic data set **306** may encrypt messages with high-strength industry-standard cryptography algorithms, including the Advanced Encryption Standard (AES) and the Rivest-Shamir-Adleman (RSA) algorithms. Each communication session between end-points may use a unique encryption key, (such as a session key) which is securely exchanged using the community-of-interest key. Other encryption protocols may be used with or in addition to the community-of-interest key such as the Diffe-Heliman (DH) key exchange algorithm.

Security engine **550** may also include other authentication data and code **558,** used for purposes of authenticating data or information, such as passwords, recorded biometric information, digital certificates, and other security information. As is appreciated by those skilled in the art after having the benefit of this disclosure, it is possible that there may be various combinations of keys and authentication data in security engine **550.**

Although described in terms of code, the exemplary security engine **550** may be implemented in hardware, software, or combinations of hardware and software. Additionally, all components of security engine **550** may be communicatively coupled to each other through controller **502.** As would be appreciated by those skilled in the art, many of the components of security engine **550** may be stored and identified as files under control of file system **522.**

Securitraphic data set. In one embodiment, transmitting the portions of the cryptographic data set separately includes transmitting at least two different portions of the message on at least two different data communication paths, such as VLANs shown in Fig. 3. For example, computing device **300**(1) (Fig. 3) transmits a portion of cryptographic data to a particular data path based on the tag value **310** (Fig. 3). Tag values (1, 2, 3..., through N) **310** (Fig. 3) assigned to each portion of cryptographic data may correspond to a particular communication data path, e.g., which VLAN(1), VLAN(2), VIAN(3)..., through N, respectively, to transmit the portion of cryptographic data set (Fig. 3). y engine **550** may also include a data splitter module **560** for splitting data that is to be transmitted from computing device **300.** Typically, security engine **550** relies on community-of-interest key **304** and/or cryptographic engine **556** for how data is split. Data splitter module **560** divides data into portions of data. A portion of data is any bit or combination of bits of data that comprise a larger set of data, such as a message or a portion of a cryptographic data set (a second key). A portion of data may be encapsulated in packets for transport, but the content of the data may be fixed or of a variable bit length. Accordingly, a portion of data (such as a portion of message or portion of cryptographic data set) corresponds to one or more bits comprising data content, i.e., payload as opposed to a data header message. Data splitter **560** may be configured to produce predetermined bit length portions of data or it may be determined dynamically in an automatic fashion.

Security engine **550** may also include an assignment module **562.** Assignment module **562** assigns tags to each portion of data (portion of a message or key). Each tag contains metadata indicating a traffic path (to be described) a particular portion of data is to be distributed through one or more networks to another computing device **300.** Other metadata may be included in the tags, such as information identifying the network the portion of data originated, the client device destination, possibly the order of the portion of data in relation to other portions of data emitted from the same network, and other suitable information.

Security engine **550** may also include an assembler module **564** configured to reassemble portions of data received at different times, and/or via different data paths. Usually different memory partitions on computing device **300** are used to reassemble the data (e.g. join each of the portions of data together in proper order). For example, a community-of-interest decryption key **304** is used to reassemble portions of a data decryption key, such as a cryptographic data set **306.** Whereas, cryptographic data set **306** is used to reassemble portions of a message. Metadata may also indicate which session the data belongs. Memory **508** in computing device **300** may be physically or logically partitioned so that each partition corresponds to a different community-of interest in an organization.

Once data is reassembled, authorized assets and messages appear accessible in plaintext format from the end-user's perspective. It is noted that various security techniques may be employed on computing device **300** to prevent the user from saving data, mixing different levels of data, or sending the data to other locations for dissemination to another network, such as via e-mail or other electronic transfer means. Applications may also execute on separate physical and/or logical partitions within computing device **300.**

### Exemplary Method of Securing Data

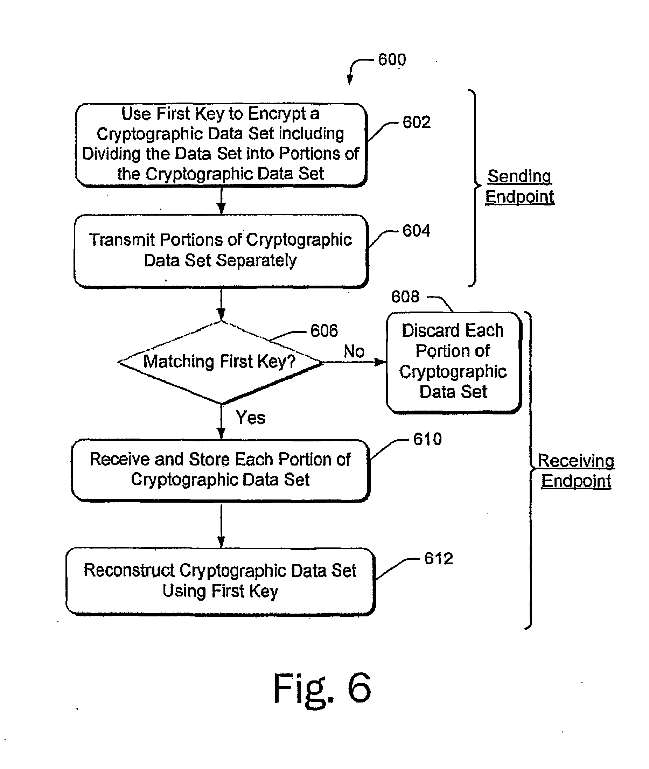

Fig. 6 illustrates an exemplary method **600** for securely transmitting a cryptographic data set among logically partitioned data paths. Method **600** includes blocks **602, 604, 606, 608, 610,** and **612** (each of the blocks represents one or more operational acts). The order in which the method is described is not to be construed as a limitation, and any number of the described method blocks can be combined in any order to implement the method. Furthermore, the method can be implemented in any suitable hardware, software, firmware, or combination thereof.

In block **602,** a cryptographic data set is divided into portions P(1), P(2),..., P(N) (Fig. 3), and tag values **310** (Fig. 3) are assigned to each portion of the set, and each portion is encapsulated in separate packets **308** (Fig. 3). For example, in one embodiment, assignment module **562** (Fig. 5) assigns tags to each portion of the cryptographic data set. Each tag contains metadata indicating a traffic path a particular portion of data is to be distributed through intranet **110** (see Fig. 3) to a target computing device **300**(2) (Fig. 3). Other metadata may be include in each packet, such as the identity of the network from which the portion of cryptographic data originated as well as the end-point the portion of data is destined. For example, in one embodiment, a community-of-interest key identifier **312** (Fig. 3) may be included in one or more of the packets indicating the particular community-of-interest key used to encrypt the cryptographic set of data.

In block **604,** the portions of cryptographic data set are transmitted from an egress point of a computing device. For example, portions of cryptographic data set P(1), P(2), ..., P(N) are transmitted from an I/O port **516** of computing device **300**(1), separately. In one embodiment, transmitting the portions separately may include transmitting at least one portion of the cryptographic data set at a different instance in time than at least another portion of the cryptog

On the receiving endpoint, in block **606,** each portion of cryptographic data is received by a target computing device. In one embodiment, as the packets received include a new community-of-interest key identifier embedded therein. In another embodiment, newly received packets by a computing device (those not associated with a communication session already established) are referred to as "INIT" (initial) packets. INIT packets prompt the receiving computing device to attempt to restore (reassemble) a cryptographic data portion encapsulated in a payload portion of the packet using a community-of-interest key accessed from the receiving computing device's repository. If there is only one community-of-interest key present in the repository, the receiving computing will attempt to reassemble the cryptographic data portion(s) of the INIT packet(s) using the single key. If there are more than one community-of-interest key in the receiving computing device's repository, the receiving computing device will iteratively try each key until it locates a key which is able to reassemble the cryptographic data portion(s) of the INIT packet(s).

However, if according to the NO branch of block **606,** no identifier **312** match is located in repository **566** according to one embodiment. Or according to another embodiment, there are no identifiers and the INIT packet(s) (its payload) are unable to be restored after trying each of the one or more community-of-interest keys in repository 566, then in Step **608,** each packet and hence portion of cryptographic data set received by the target device is discarded, erased, and/or ignored. This may represent a situation where the end-user of an endpoint does not have authorization to view a message, because the end-user (or the end-user's computing device) lacks the requisite community-of-interest key. For example, the end-user may not have the requisite security level clearance to view a message, or the end-user may not be a member of the same community-of-interest.

If according to the Yes branch of block **606,** a community-of-interest key matching the identifier is located, or a community-of-interest key is identified which is able to restore the payload portion of the INIT packet(s), then in block **610** each portion of the cryptographic data set is temporarily stored for eventual reassembly. At this point a tunnel can be established between the sending and receiving endpoint computing devices.

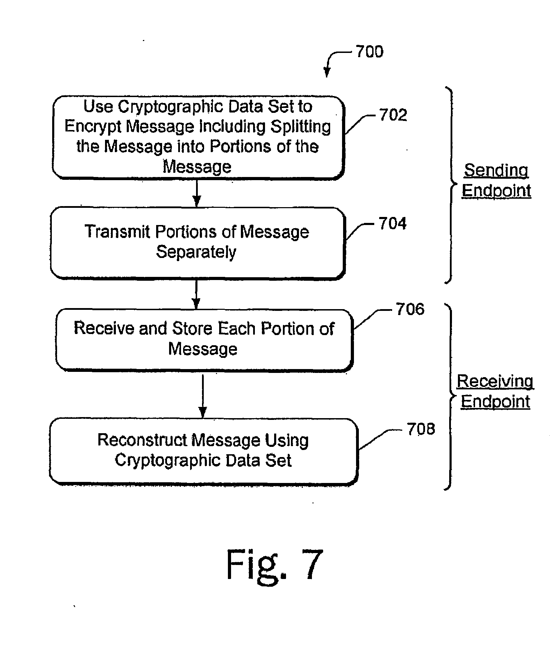

In block **612,** the cryptographic data set is decrypted. That is, the cryptographic data set is reconstructed (reassembled) by decrypting each portion of the cryptographic data set using the community-in-interest key identified in block 610. For example, security engine **550** (Fig. 5) may use an assembler module **564** (Fig. 5) in conjunction a community-of-interest key **304** to reassemble portions of cryptographic data set received at different times, and/or via different data paths. Once all portions of cryptographic data set are received, it is possible to fully reassemble cryptographic data set **306** (Fig. 3, Step D) on the receiving computing device. Now, cryptographic data set **306** is in a usable form for use to decrypt portions of a message received, which will be described with reference to Fig. 7.

It should be appreciated by those skilled in the art having the benefit of this disclosure that certain operational acts of method **600** may be performed differently. For example, splitting of portions of the cryptographic data set may only be performed on one portion of the set. Or, different techniques may be used to encrypt different portions of the set. It is also noted that not including an identifier in the packets in the alternative embodiment above, is a more secure method of encrypting and decrypting cryptographic data, and preferred in highly secret environments, such as dealing with national security.

Fig. 7 illustrates an exemplary method **700** for securely transmitting a message among logically partitioned data paths. Method **700** includes blocks **702, 704, 706,** and **708** (each of the blocks represents one or more operational acts). The order in which the method is described is not to be construed as a limitation, and any number of the described method blocks can be combined in any order to implement the method. Furthermore, the method can be implemented in any suitable hardware, software, firmware, or combination thereof.

In block **702,** a message is divided into portions P(1), P(2),..., P(N) (Fig. 4), and tag values **410** (Fig. 4) are assigned to each portion of the set, and each portion is encapsulated in separate packets **408** (Fig. 4) using cryptographic data set **306** (Fig. 4). For example, in one embodiment, assignment module **562** (Fig. 5) using cryptographic data set **306** (Fig. 4) assigns tags to each portion of the message. Each tag contains metadata indicating a traffic path a particular portion of a message is to follow through intranet **110** (see Fig. 4) to a target computing device **300**(2) (Fig. 4).

In block **704**, the portions of cryptographic data set are transmitted from an egress point of a computing device. For example, portions of cryptographic data set P(1), P(2), ..., P(N) are transmitted from an I/O port **516** of computing device **300**(1), separately. In one embodiment, transmitting the portions separately may include transmitting at least one portion of the message at a different instance in time than at least another portion of the message. In one embodiment, transmitting the portions of the message separately includes transmitting at least two different portions of the message on at least two different data communication paths, such as VLANs shown in Fig. 4. For example, computing device **300**(1) (Fig. 4) assigns a portion of message to a particular data path based on the tag value **410** (Fig. 4). Tag values (1, 2, 3..., through N) **410** (Fig. 4) assigned to each portion of cryptographic data may correspond to a particular communication data path, e.g., which VLAN(1), VLAN(2), VLAN(3)..., through N, respectively, to transmit the portion of cryptographic data set (Fig. 4).

In block **706,** each portion of the message set is temporarily stored for eventual reassembly in some portion of memory **508** (Fig. 5) of a computing device.

In block **708,** the message is put into a useable form. That is, the message is reconstructed (reassembled) by decrypting each portion of the message using the cryptographic data set. For example, security engine **550** (Fig. 5) may use an assembler module **564** (Fig. 5) in conjunction with cryptographic data set **306** (Fig. 4) to reassemble portions of message (P(1), P(2), ..., P(N)) (Fig. 4) received at different times, and/or via different data paths. Once all portions of the message are received, it is possible to fully reassemble message **402** (Fig. 4, Step D) in a usable form on the receiving computing device.

It is should be appreciate by those skilled in the art having the benefit of this disclosure that certain operational acts of method **700** may be performed differently. For example, splitting of portions of the message may only be performed on one portion of the message. Or, different techniques may be used to encrypt different portions of the message.

Additionally, any exemplary functionality provided by a module or function block (such as in Figs. 5, 6, or 7) may be described in the general context of computer-executable code being executed by a processor of a computer. Generally, computer-executable code include modules, routines, programs, objects, components, data structures, logic, and other executable code that perform particular tasks or implement particular abstract data types when executed by a computing device. Computer-executable code may be located in a computer-readable-medium, such as but not limited to, local, remote, and/or distributed computer storage media including memory storage devices.

### Exemplary Gateway Devise

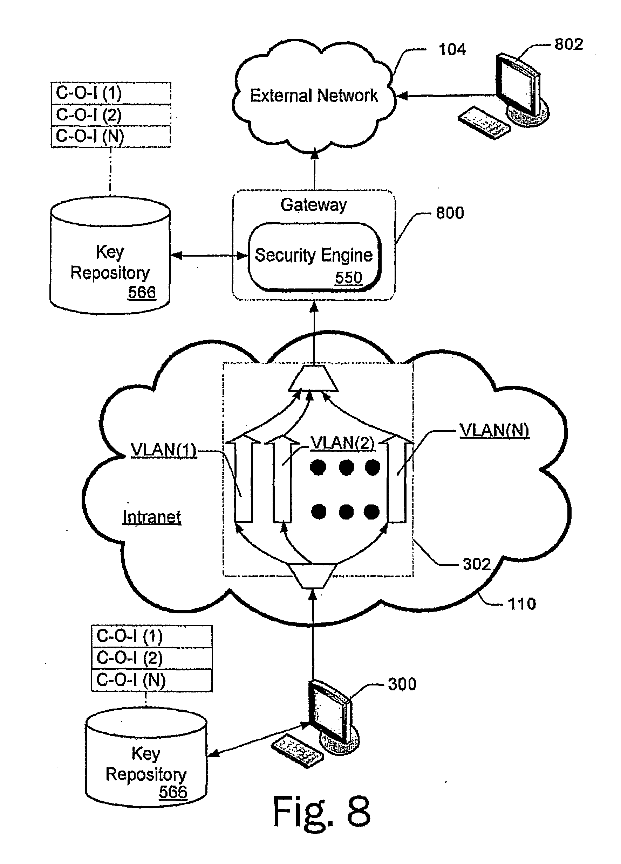

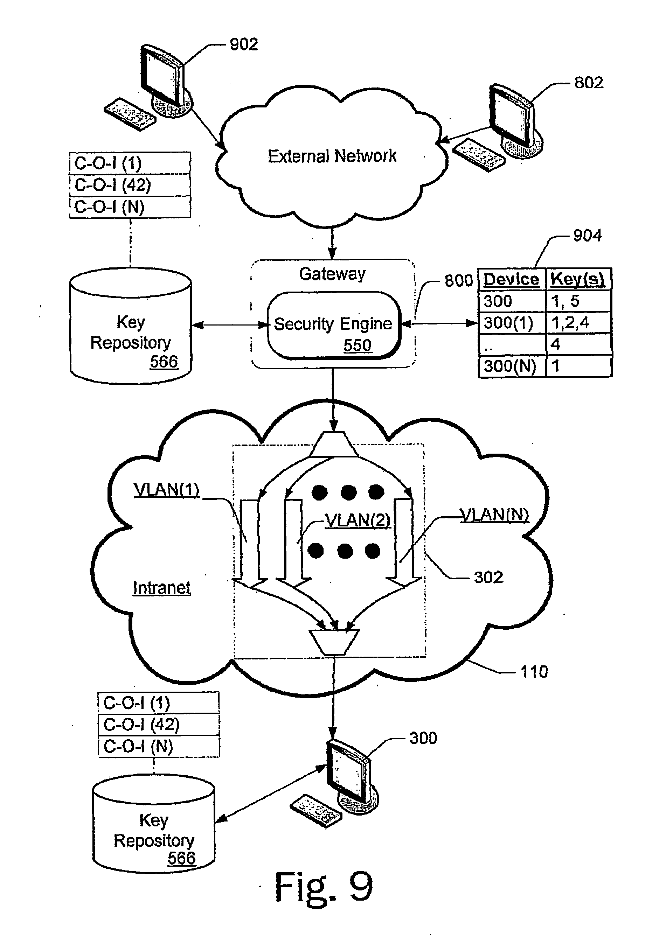

Figs. 8 and 9 show an exemplary gateway **800** interposed between private network (e.g., intranet **110** of organization **101**) and another network such as the internet **104**. Fig. 8 shows a logical illustration of a message transmitted from a computing device **300** to gateway **800,** which is destined for a computing device outside of intranet **110** (representing a private network). Whereas, Fig. 9 shows a logical illustration of a message transmitted from a computing device in another network (such as **104**) to gateway **800**, which is destined for a computing device **300** within intranet **110**. In one embodiment, gateway **800** is a computing device that serves as an entrance and/or exit to a network, such as intranet **110**. Gateway **800** may include a gateway device, and edge devices and other suitable devices that provide entry and exit points to/from a private network. In the exemplary embodiment, gateway **800** includes many components identical to those depicted in Fig. 5. For clarity and brevity, the description of these components will not be repeated.

Referring to the example of Fig. 8, in one embodiment, to ensure that a message is not transmitted beyond the edge an intranet without authorization, such as outside of intranet **110,** gateway device **800** will only establish a communication session with a computing device that possess a requisite community-of-interest key. If either the gateway device **800** or computing device **300** does not possess a matching community-of-interest (C-O-I) key (such as COI(1), COI(2) or COI(N) see Fig. 8) then a communication session cannot be established between computing device **300** and gateway device **800**, and therefore, a message is not transported outside of network **110** via gateway **800.** That is, no communication session (or tunnel) is able to be established between computing device 300 and gateway 800, and therefore any packets attempted to be sent to gateway 800 are dropped, discarded, ignored and/or erased.

In one embodiment, when gateway transmits a message destined for a computing device in other network that is not part of an organization **101** such as **802** (Fig. 8), the message is converted by a gateway device **800** into a format in which it can be received by computing device **802** without having knowledge of the type of security measures used within organization **101.** Accordingly, it is not required to share a community-of-interest key with entities outside of organization **101.** As would be appreciated by those skilled in the art, however, any suitable protocol may be used by gateway **800** when transmitting a message external to intranet **110.**

In another embodiment, when gateway **800** is requested to transmit a message to a computing device **802** outside of network **110**, a separate instruction may be sent to gateway **800**, instructing gateway **800** to reassemble the message in a form that it can be reassembled by computing device **802** without having possession of a community-of-interest key. The instruction may be embedded as part of the community-of-interest key, part of the cryptographic data set, as part of a separate message, or inherently associated with a particular community-of-interest key. Additionally, for extra security, only community-of-interest keys associated with data permitted to be sent outside of intranet **110** may be installed on gateway **800.**

Referring to Fig. 9, in one embodiment, an incoming message received by gateway **800** destined for computing device **300** within intranet **110** will be transmitted by gateway **800** to device **300,** if device **300** is authorized to receive it, based in part, on device's **300** possessing a requisite community-of-interest key in repository **566.** For example, suppose a computing device **902** outside of intranet **110** but part the same organization **101** as computing device **300,** sends a message to computing device **300.** Also suppose that a community-of-interest key was associated with the message. When gateway **800** receives the message gateway **800** will transmit the message to computing device **300,** if computing device **300** possesses a matching community-of-interest key. Otherwise, if computing device **300** does not possess a matching community-of-interest key, a communication session cannot be established between gateway **800** and computing device **300.**

In another embodiment, gateway **800** may possess records in a database **904** which may contain a list of computing devices in a local intranet **110,** and a record of which community-of-interest keys each devices possess. The records may include the actual keys or a value ID associated with key. Accordingly, prior to attempting to establish a communication session with a device in intranet **110**, gateway **800** may determine whether the device is authorized to receive the message by looking-up in database **904** whether the device contains the requisite Community-of-interest key.

For example, suppose the message received by gateway **800** destined for computing device **300** has a key ID value of 1 associated with it, then gateway **800** will check to determine whether computing device **300** possesses the same key ID value in database **904**. If computing device **300** contains the identical key ID value of 1, which it does in this example, then gateway **800** will establish a communication session using the community-of-interest key corresponding to key ID value 1. On the other hand, if the message received by gateway **800** destined for computing device had a key ID value of other than 1 or 5, then gateway **800** would discard, erase, or ignore the message and not attempt to send it to computing device **300**.

Alternatively, in another embodiment, gateway 800 will attempt to establish a tunnel between a target computing device 300 (endpoint) using at least one known community-of-interest key 304. If the target computing device 300 (endpoint) does not have the same community-of-interest key 304, then a tunnel cannot be established between gateway 800 and the target computing device, and the packets are dropped. In this embodiment, gateway 800 does not need to be configured to receive any community-of-interest key IDs within the packet or maintain a list of such IDs.

As used herein, a tunnel refers to a temporary data path (or paths such as VANs) established between two endpoint computing devices for providing a secure transmission of data during a communication session. In one embodiment, the cryptographic data set is used for encrypting one message or a group of messages during the communication session between the endpoints. A tunnel may be established in accordance with any suitable protocol, such as but not limited to, Layer 2 tunneling protocols, PPTP (Point-to-Point Tunneling Protocol), SOCKSv5, IP Security, and other ways of establishing a secure link between two devices over a network.

When a communication session is established between gateway **800** and computing device **300** for an incoming message destined for computing device **300**, gateway **800** parses the message and uses fabric **302** to partition the portions of the message. That is, the message is parsed and sent over different data paths VLAN(1), VLAN(2), ..., VLAN(N) via fabric **302** (Fig. 9) to its destination. As components and the procedures for establishing a communication session are mostly identical to those depicted in Figs. 3 -7 the description of these components and procedures will not be repeated for clarity and brevity.

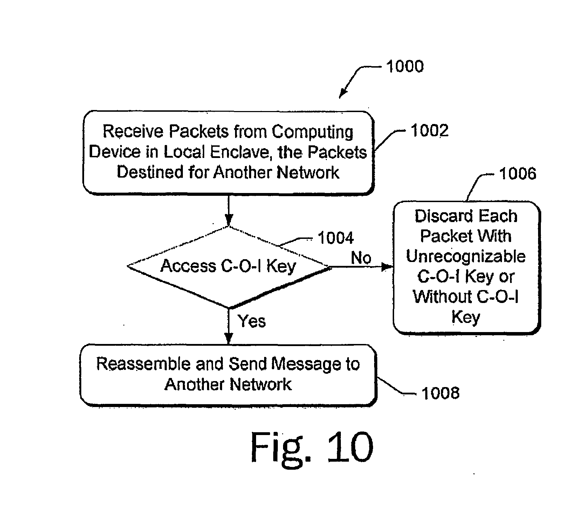

Fig. 10 illustrates an exemplary method **1000** for transmitting a message destined for another network such as internet **104** (Fig. 8) via gateway **800** (Fig. 8). Method **1000** includes blocks **1002, 1004, 1006,** and **1008** (each of the blocks represents one or more operational acts). The order in which the method is described is not to be construed as a limitation, and any number of the described method blocks can be combined in any order to implement the method. Furthermore, the method can be implemented in any suitable hardware, software, firmware, or combination thereof.

In block **1002,** packets containing one-or-more tags are received by a gateway device **800** (Fig. 8) from a computing device **300** (Fig. 8). A community-of-interest key identifier value **312** (Fig. 3) may be included in one or more of the packets indicating a particular community-of-interest key used to encrypt a cryptographic set of data sent to gateway **800** (Fig. 8) by a computing device **300** (Fig. 8) in local intranet **110** (Fig. 8). Alternatively, in another embodiment, the packets may not contain an identifier value, in which case gateway **1004** may determine if it has a requisite community-of-interest key to decrypt the packets, by actually attempting to decrypt the packets using each community-of-interest key installed in its repository.

In block **1004**, gateway **800** (Fig. 8) determines if it can locate a communlty-of-interest key for decrypting the portions of cryptographic data embedded in the packets (if they are encrypted). For example, in one embodiment security engine **550** determines if a corresponding key identifier value is stored in its repository **566.** In another embodiment, security engine 550 determines if can access the appropriate key by iteratively trying each key in its repository until it locates one which is able to reassemble the cryptographic data portion(s). That is, no community-of-interest key identifier value 312 is used, but rather gateway 800 attempts to reconstruct and decrypt at least one newly received packet (e.g., "INIT packet") using one or more community-of-interest keys 304 stored in its repository 566.

If according to the NO branch of block **1004**, no match is located in repository 566, or gateway 800 is unable to decrypt the INIT packet(s) using at least one of all presently stored community-of-interest keys within its repository 566, then in Step **1006**, each packet sent to gateway **800** with the associated identifier (or without an identifier) is discarded, erased, and/or ignored. The message is therefore not transmitted beyond the edge of intranet **110**.

On the other hand, if according to the Yes branch of block **1004**, a community-of-interest key matching the identifier value is located, or according to an alternative embodiment a community-of-interest key is used to successfully decrypt the INIT packet(s), then in block **1006** gateway **800** may reassemble and send the message in accordance with suitable methodology blocks described with reference to Figs. 6 and 7, respectively. Alternatively, in another embodiment, the message may be reassembled in accordance with the applicable "receiving endpoint" portions of Figs. 6 and 7, and then transmitted to another network using some other transmission protocol.

### Exemplary Packet Preparation and Transmission Techniques

Security engine **550** of any computing device is able to facilitate transmission of data via tunneling using VLANs as described. Exemplary techniques used to implement the tunnels and handling of packets is presented below.

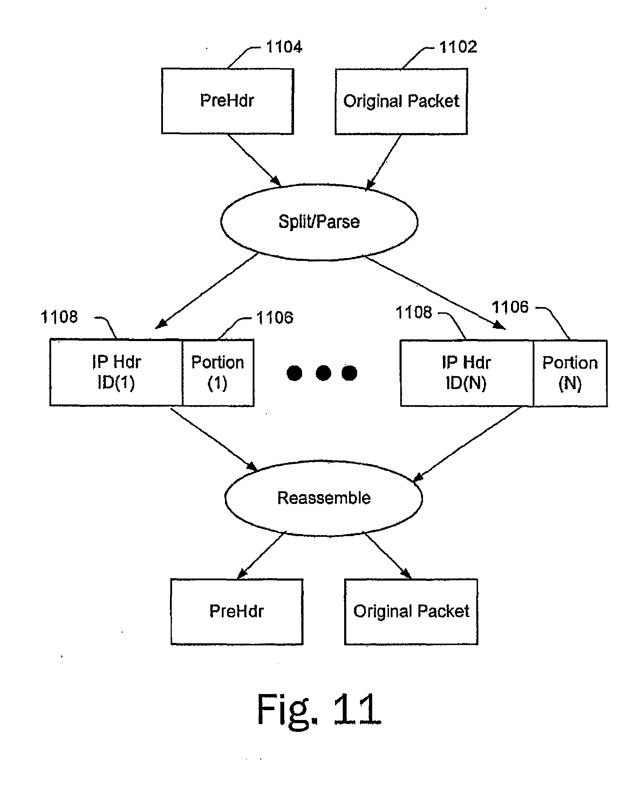

Fig. 11 illustrates an overall logical flow of how an original packet **1102** containing a cryptographic data set, or message, is concatenated with pre-header **1104** and then split into portions **1106** which are appended with an IP header **1108** containing an ID value indicating which set of data the portion **1106** belongs. Splitting function **1110** and reassembly function **1112** are performed by one or more sets of code such as security engine **550** (Fig. 5) executing on computing devices **300** (Fig. 5).

For the discussion that follows, the packet structures are defined as follows:

```
 MLSTPPkt ::= IPv4Hdr(Identifier=<NextId>) // Normal IPv4 header
            Pad:16o                        // (16 octets) Alignment; random
            ShareData:*
 
   ShareData ::= SelfRestoreShare | // INIT, JOIN, SYNC
                SyncedMsgShare      // TERM, DATA, IDLE, QERY, RPRT
 
     SelfRestoreShare ::= HdrLens:16[N-M+1]    // Lengths of other headers
                    ParserHdrShare:<HdrLen>o   // Self-restore parser hdrs.
                    PreHdrShare:*              // Share of PreHdr
 
 SyncedMsg ::= PreHdr     // Message type-specific
            [IPv4Pkt]     // DATA messages only
  PreHdr ::= INIT      |       // Unicast tunnel initialization (self-restoring)
             TERM      |       // Unicast tunnel termination
             DATA      |       // Tunncled IP packet
             IDLE              // Obfuscation message
 
     INIT ::= "INIT"   // Unicast tunnel initialization (self-restorhig)
               D:16              // Receive queue depth
               MyTag:16          // Ran dom tunnel id
              YourTag:16         // Zero or your MyTag
               FirstIds:16[D,N]  // First set of NextIds
 
     TERM ::= "TERM"             // Unicast tunnel termination
 
     DATA ::= "DATA"             // Tunnel IP packet
             NextIds:16[D,N]     // Ids in subsequent messages
 
     IDLE ::= "IDLE"             // Obfuscation message
            NextIds:16[D,N]      // IDLEs consume Ids, also
```

The contents of ShareData differ depending on the type of packet that is being transmitted. For INIT (initial) packets, ShareData is the concatenation of:
1) HdrLens:16 [N-M+1] - a list of lengths of ParserHdrShares in other members of this set of INIT packets;
2) ParserHdrShare - a split share of the Parser Headers obtained by calling SecureParser to generate headers; and
3) PreHdrShare - a split share of the Pre-header.

For TERM and IDLE packets, ShareData is a split share of an OrigData containing a Pre-header and optional random octets that pad the OrigData up to a fixed packet size.

DATA packets are similar to TERM and IDLE packets, but also contain an IPv4 packet following the Pre-header. The random Pad is reduced in size accordingly, but may still optionally pad the packet up to a fixed size.

### Exemplary Tunnel Setup/Teardown Implementation

To begin communications with another endpoint (such as computing device **300**(2) (Fig. 3)), an initiating endpoint (such as computing device **300**(1) (Fig. 3)) uses its assigned community-of-interest ID.

Cryptographic data **306** portions are generated and saved. An INIT version of a PreHeader is then built, with D set to the maximum input queue depth. This value specifies how many consecutive frames may be lost over a particular VLAN before the tunnel must be torn down and reestablished. MyTag is set to a random value which identifies this attempt to initiate the tunnel. YourTag is set to zero. The Firstlds array contains D N-tuples, each of which represents the expected values of the first D IPv4Hdr.Identifier fields of non-INIT packets received over each of the N VLANs. The Pre-header is then split into N PreHdrShares (e.g. portions of a larger data set).

Finally, N Packets are built (one for each VLAN), where the IPv4Hdr.Identifier field contains a random, meaningless value. The ShareData part of the packet is a concatenation of HdrLens, a cryptographic data portion that was generated when the previous step, and a PreHdrShare. The cryptographic data portion and PreHdrShare are both the ith share in their respective sets. The HdrLens represent the fences between the ParserHdrShares and the PreHdrShares. Since the HdrLens are sent in cleartext, they contain information about the INIT packets sent over other VLANs. For example, if N=4, M=3, there are N-M+1, or 4-3+1, or 2 HdrLens values. For a packet sent over VLAN#2, HdrLens[0] and HdrLens[1] are the lengths of the ParserHdrShares sent over VLAN#3 and Van#0, respectively.

An Endpoint must establish (or reestablish) a tunnel to another Endpoint under any of the following circumstances:
1) A set of packets is received from an IP address which does not have an active tunnel associated with it.
2) A set of packets is received over an active tunnel whose IPv4.Identifier fields do not match any in the Expectedlds array. In this case the existing tunnel must be destroyed and all data structures associated with it scrubbed before attempting to establish a new tunnel.
3) A packet is to be sent to an IP address which does not have a tunnel associated with it.

In case 2), the active tunnel is destroyed, then, as in case 1), the received packet is treated as an INIT packet. If the cryptographic data portion can not be extracted (i.e. the HdrLens are invalid) or they do not restore properly, the received packets are discarded silently. If, though, the cryptographic data portions can be restored, the PreHdrShares are restored and the MyTag, YourTag, and Firstlfis[] fields are extracted and are used to populate the Expectedlds[] array. A random LocalTag is created to refer to this particular session.

MyTag and YourTag are random values which identify the particular session instances on either side of a tunnel. MyTag indicates the sending session id, while YourTag indicates what receiving endpoint the sending device believes it is communicating with. Zero is a special value used for YourTag. Zero indicates that the sender does not yet have a tag for the receiving side. An INIT packet with YourTag == 0 is called an incomplete INIT, one with YourTag equal to something else, but not LocalTag, is an unmatched INIT, and an INIT whose YourTag == LocalTag is a matched INIT. When an INIT packet is successfully restored, MyTag is saved as the tunnel RemoteTag.

The INIT handling process is:
1) When an IP frame is to be sent to an unknown IP address:
   a. Assign LocalTag a random value.
   b. Build and send an incomplete INIT with .MyTag=LocalTag and .YourTag=0.
2) When an incomplete or unmatched INIT is received:
   a. Save .MyTag as RemoteTag.
   b. Build and send a matched INIT.
3) When a matched INIT is received:
   a. Configure the Security Engine **550** based on the extracted cryptographic data set **306**.
   b. Allow transmissions through the tunnel.

When a computing device shuts down, or the user logs out, all tunnels must be torn down and all data structures scrubbed. As a courtesy to the partner Endpoints, termination notifications, in the form of TERM messages are sent over each active tunnel.

To teardown a tunnel, the sending Endpoint builds a TERM Pre-header, setting NextIds[] to random, meaningless values. The Pre-header is split into PreHdrShares, each of which is prepended with an IPv4Hdr containing a value for its Identifier field which are the next published NextIds. The resultant packets are sent across the N VLANs. The sending Endpoint then destroys the corresponding send and receive sessions and scrubs and frees all data structures associated with that tunnel.

When an Endpoint receives a TERM message, it immediately destroys the tunnel, and scrubs and frees all data structures.

When an Endpoint receives a set of packets whose IPv4Hdr.Identifiers are not in its Expectedlds[] array, it tears down the tunnel as described above. An attempt is then made to restore the received packets as if they constitute an INIT message. If they are successfully restored as an INIT message, INIT processing proceeds as described above.

### Exemplary Nominal Packet Handling

When a nominal (DATA or IDLE) packet is ready for transmission, the Endpoint prepends a header which contains the appropriate 4-character opcode ("DATA" or "IDLE") and an array of N 16-bit values in the NextIds field. The NextIds field contains a two-dimensional array of values for the IPv4Hdr.Identifier field of the next D sets of packets. The NextIds field allows the detection of lost and/or out-of-order packets, by telling the receiver what [Pv4Hdr.Identifier values to look for over the next D packets on a particular VLAN. If packets with different IPv4Hdr.Identifier values are received, the receiver knows that something is wrong and can take remedial action. The previously sent NextIds values are dropped from the NextIds[] field, and a new set of random NextIds[N] values are generated each time a set of Packets are sent.

D represents the depth of the receive queues for each Partner/VLAN combination. The tunnel can recover from the loss of (D-1) consecutive original packets. If D or more original packets are lost consecutively, the receive tunnel is cleaned up and the send tunnel is torn down as described above. An original packet is lost if insufficient portions are received to restore the original message.

The Pre-header and any original packet data is then split into N portions. Each portions is pre-pended with an IPv4Hdr containing the next valid Identifier value. The portions are then transmitted over their appropriate VLANs.

An example of how Hdr.NextIds[] and IPv4Hdr.Identifier fields are related is given in Table 1 below. In the example, L=0, M=2, N=3 and D=2. Note that the ExpectedIds[] array is populated from the Hdr.NextIds[D,N] array. M indicates the minimum number of data portions required to restore the original message. M may be less than or equal to N.

**Table 1 - Packet Identifiers**

| | **Original Msg** | **Sent .NextIds[2,3]** | **Revd** .**Identifier** | **Rev Queues** | **Expected Ids[2,3]** | **Discard Ids[3,2]** | **Restored Msg** |
|---|---|---|---|---|---|---|---|
| 1 | INIT | [R1,R2,R3], [R4,R5,R6] | Rr | (Rr); {}; {} | [*,*,*], [] | [], [], [], | |
| 2 | | | Rs | {Rr}; {Rs}; {} | [*,*,*], [R1,R2,R3] | [], [], [*] | INIT |
| 3 | | | Rt | {}; {}; {R1} | [R1,R2,R3], [R4,R5,R6] | [], [], [*] | |
| 4 | DATA1 | [R4,R5,R6], [R7,R8,R9] | R1 | {R1}; (); {} | [R1,R2,R3], [R4,R5,R6] | [], [], [], | |
| 5 | | | R2 | {R1}; {R2}; {} | [R1,R2,R3], [R4,R5,R6] | [], [], [R3] | DATA1 |
| 6 | | | R3 | {}; {}; {R3} | [R4,R5,R6], [R7,R8,R9] | [], [], [R3] | |
| 7 | DATA2 | [R7,R8,R9], [R10,R11,R12] | R4 | {R4}; [], [], | [R4,R5,R6], [R7,R8,R9] | [], [], [] | |
| 8 | | | R5 lost | {R4}; {}; {} | [R4,R5,R6], [R7,R8,R9] | [], [], [] | |
| 9 | | | R6 | {R4}; {}; {R6} | [R4,R5,R6], [R7,RB,R9] | [], [R5], [] | DATA2 |
| 10 | IDLE1 | [R10,R11,R12], [R13,R14,R15] | R7 | {R7}; {}; {} | [R7,R8,R9], [R10,R11,R12] | [], [R5], [] | |
| 11 | | | R8 | {R7}; {R8}; {} | [R7,R8,R9], [R10,R11,R12] | [], [R5], [R9] | IDLE1 |
| 12 | | | R9 | {}; {}; {R9} | [R10,R11,R12],[R13,R14,R15] | [], [R5], [R9] | |
| 13 | DATA3 | [R13,R,14,R15], [R16,R17,R18] | R10 | {R10}; {}; {} | [R10,R11,R12], [R13,R14,R15] | [], [R5], [] | |
| 14 | IDLE2 | [R16,R17,R18], [R19,R20,R21] | R13 | {R10,R13}; [], {}; | [R10,R11,R12], [R13,R14,R15] | [R5], {} [] | |
| 15 | | | R15 | {R10,R13}; {}; {R15} | [R10,R11,R12], [R13,R14,R15] | [], [R5,R14], [] | IDLB2 |
| 16 | | | R12 | {R10}; {}; {R12} | [R10,R11,R12], [R16,R17,R18] | [], [R14,R11], [] | DATA3 |
| 17 | | | R11 | {}; {R11}; {} | [R16,R17,R18], [R19,R20,R21] | [], [R14,R11], [] | |
| 18 | | | R14 | {}; {R14}; {} | [R16,R17,R18], [R19,R20,R21] | [], [R41,R11], [] | |

Even though the example random values in Table 1 are R1, R2, ..., the actual values are in no way sequential, and Ri should bear no relationship to R(i-j) or R(i+k) for any value of i, j or k.

For INIT (intial) packets, the IPv4Hdr.Identifier fields are random, meaningless values (Rr, Rs, Rt). Since the receiver has no Expectedlds, no validation of the IPv4Hdr.Identifier fields is done. Random values should still be used, however, to hide the fact that INIT packets are indeed INIT packets.

When an packet is received, it is placed on the receive queue corresponding to the unique Partner/VLAN pair. The ExpectedIds column corresponding to the packet's VLAN is searched. If the packet's identifier is not found, the Discardids row for this VLAN is searched. If it is found in the Discardids row, the packet is discarded and the Discardids row's insert pointer is advanced. If the packet's Identifier is found, the ExpectedIds row's count is incremented. When an ExpectedIds row's count is at least M, the packets are dequeued from the Rcv Queue and restored. The newly restored Hdr.NextIds (header.next.ID) values are then added to the ExpectedIds array and the consumed Expectedlds values are scrubbed from the array. Any unmatched values in the consumed Expectedlds row are moved to the Discarlds array row corresponding to the column in Expectedlds (VLAN#).

So, to be clear, the Nextids[D,N] array's columns are indexed by VLAN#, the rows represent sequential sets of Ids. There is a Rcv Queue for each VLAN. The Expectedlds[D,N] array's columns are indexed by VLAN#, as with the NextIds array. Conversely, Discardlds[N,D] array's rows are indexed by VLAN#.

The value of D should be kept as small as reasonably possible, given the reliability of the link layer, as each incremental value of D adds N 16-bit NextIds, or (2*N) octets, to the PreHdr (pre-header), resulting in a corresponding reduction in the MTU size reported to the Upper-Layer Protocols.

Since DATA, TERM, and IDLE packets are padded to MTU size prior to splitting, the resultant portions, and hence the packets may all be of approximately the same size.

Only a single adapter interface is exposed to the IP layer above the Endpoint driver. Because of this, a single IP address is assigned to represent the Endpoint. Each endpoint's VLAN connections are represented by inferred IP addresses derived from this single assigned address.

When an Endpoint is initiating a tunnel, because it has just discovered the partner, or because it must reset the tunnel, it sends INIT packets whose HdrShares were split with its designated community-of-interest key. The Endpoints may support multiple community-of-interest keys, which it can use sequentially to negotiate to the highest-security key supported by both Endpoints. The community-of-interest key negotiation algorithm is as follows:
1) Sending Endpoint initiates a tunnel to the receiving Endpoint by sending it INIT packets split with the community-of-interest key of the first (highest precedence) Keyld assigned to it.
2) Receiving Endpoint receives packets from an unknown Endpoint, so it allocates a Partner and attempts to restore the packets using its first community-of-interest key. If this fails, an attempt is made with the next community-of-interest key in its list of active community-of-interest keys, then the next, and so on until either an INIT packet is restored or the list is exhausted. If an INIT packet is successfully restored, the receiving Endpoint binds the remote IP address to the successful community-of-interest key. If the list is exhausted without an INIT packet being restored, the share packets are silently discarded.

### Exemplary IP Address Convention Implementations

In one embodiment, packets are routed using the CIDR (Classless Internet Domain Routing (CIDR) convention for specifying a hierarchy of IP addresses. In general, CIDR divides the internet into hierarchical addressing domains based on variable-length address prefixes. This is in contrast to the now obsolete method of specifying a hierarchy using fixed-length subnet masks for different address classes (e.g. classes A, B, and C).

Within a CIDR hierarchy, networks are divided first into Autonomous Systems (ASes), which are in turn divided into Areas. ASes are configuratianally-independent policy domains that roughly correspond to intranets. Areas are link-layer broadcast domains that roughly correspond to old-style subnets. The terms intranet and subnets are often used interchangeably with autonomous system and area, including in this document.

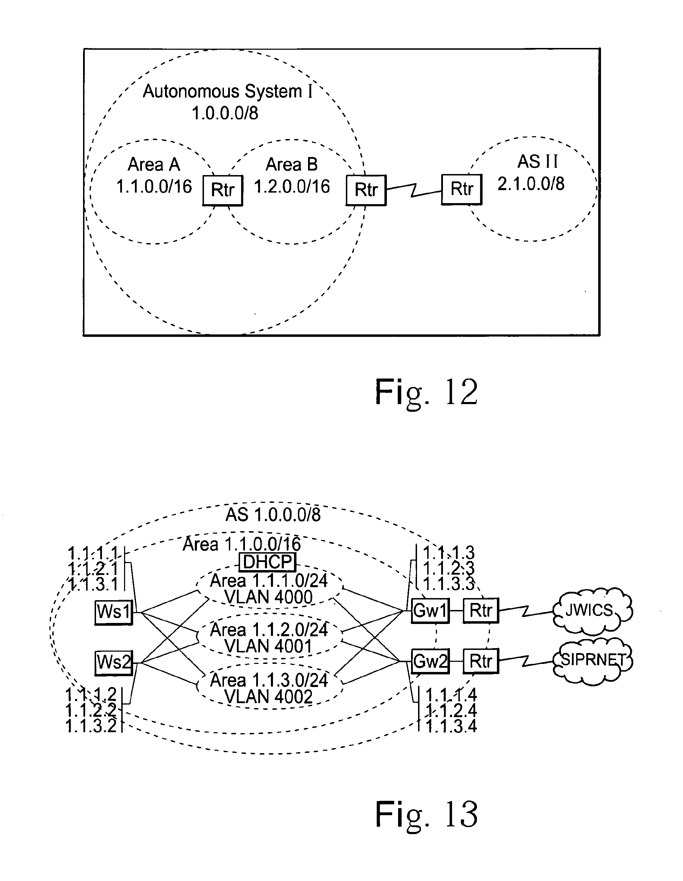

Fig. 12 shows a graphical logical relationship between Areas and ASes. The network address nomenclature used is w.x,y.z/p, where w, x, y, and z are arbitrary octects and p is the length of the network prefix. So, 1.2.0.0/16 indicates a set of IP addresses 0x0102XXXX, where XXXX are any two octets. In pre-CIDR terms, this would be a class B address. CIaR allows arbitrary prefix lengths, however, so 1.2.28.0/22 is also a valid network address that encompasses host addresses 1.2.28.0 (0x01021C00) through 1.2.31.256 (0x01021FFF). Host addresses have an implied prefix length of 32.

Area A of Fig. 12, is referred to as a "stub network", since there is only one path into or out of it, while Area B is a "transit network", since packets destined for other networks can flow through it (from a host in Area A to another in AS II, for example).

In one network implementation, all clients and servers are within the same area as shown in Figure 13. Referring to Fig. 13, the Autonomous System (AS) 1.0.0.0/8 contains an Area 1.1.0.0/16, which in turn contains the Workstation/Servers (Ws) **300** (such as shown above in Figs. 3-5 and 8-9) and Gateways (GWs) (such as **800** shown in Figs. 8 and 9 above). Additional sub-Areas 1.1.x.0/24 are included in Area 1.1.0.0/16. These sub-Areas represent N+1 VLANs (in this example, N=2). Area 1.1.1.0/24 carries the initial, unparsed traffic, such as DHCP packets, required to add workstations to the network. By convention, the VLAN for this unparsed Area is numbered 4000.

The links connecting Wses and Gws to the three sub-Areas/VLANs are logical links which are multiplexed (using VLAN tags) over a single physical connection to a switch.

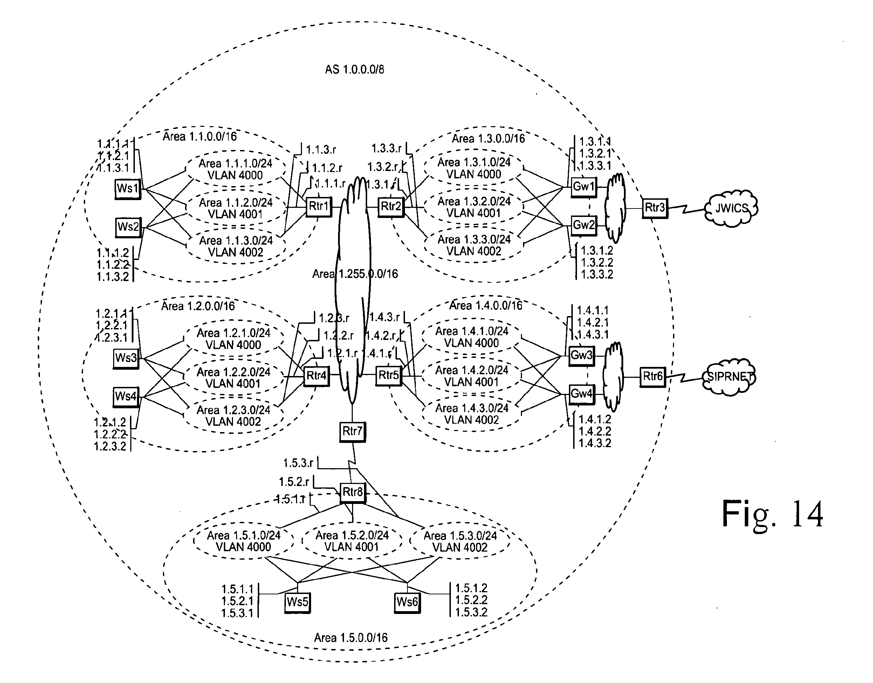

The DHCP server is configured to lease IP addresses within Area 1.1.1.0/24 only. The other sub-Areas (1.1.2.0/24 and 1.1.3.0/24) are implicitly assigned to the parsed VLANs (by convention 4001 through 4000+N, or 4001 and 4002 in this example). Gateways are typically assigned a fixed IP address on the unparsed sub-Area (1.1.1.3 and 1.1.1.4 in Figure 14).

An Endpoint implicitly assigns itself IP addresses on the parsed sub-Areas by incrementing the Area number by one for each sub-Area/VLAN up to N. This means that base Area numbers, which are determined by a network administrator based on the required capacity, must be separated by at least N+1. In these examples, 254 sub-Areas are reserved, even though only three are used. This allows the dotted-decimal notation to clearly show the delineation between sub-Areas. In a real-world network, with N=2, the sub-Areas would more likely be: 1.1.64.0/18, 1.1.128.0/18, and 1.1.192.0/18. The next available base Area number, then, would be 1.2.0.0/16.

Table 2 below shows a relationship of VLANs and IP addresses for the Wses and GWs in Figure 14.

**Table 2**

| **Endpoint** | **Area** | **VLAN 4000 IP Addr (assigned)** | **YLAN 4001 IP Addr (inferred)** | **VLAN 4002 IP Addr (inferred)** |
|---|---|---|---|---|
| Ws1 | 1.1.0.0/16 | 1.1.1.1 | 1.1.2.1 | 1.1.3.1 |
| Ws2 | 1.1.0.0/16 | 1.1.1.2 | 1.1.2.2 | 1.1.3.2 |
| Gw1 | 1.1.0.0/16 | 1.1.1.3 | 1.1.2.3 | 1.1.3.3 |
| Gw2 | 1.1.0.0/16 | 1.1.1.4 | 1.1.2.4 | 1.1.3.4 |

A more complex network implementation, representative of a garrison location with a remote area deployed to the field is shown in Figure 15. Referring to Fig. 14, AS 1.0.0.0/8 contains five Areas. Areas 1.1.0.0/16 and 1.2.0.0/16 encompass local (i.e. garrison) Workstations/Servers (WS1.,Ws4). Areas 1.3.0.0/16 and 1.4.0.0/16 each contain the Gateways needed to connect to a particular external network. For scalability purposes, multiple Gateways may connect to a particular external network (e.g. Gw1 and Gw2 connect to JWICS, whereas Gw3 and Gw4 connect to SIPRNET). Area 1.5.0.0/16 represents a network deployed to a forward location, but connected to the garrison via one or more WAN links between routers Rtr7 and Rtr8. Finally, Area 1.255.0.0/16 is the router-to-router transit area.

The Ws and gateway configurations are similar to those shown in Figure 14, with the exception that the Gws are on separate sub-Areas, and additional Wses are present in Areas 1.2.0.0/16 and 1.5.0.0/16. Individual endpoints are configured the same way: Wses are assigned base IP addresses via DHCP, while Gws have predefined IP addresses. The DHCP servers are left off the diagram to reduce clutter.

The major change in the network of Fig. 14 is the use of routers to connect Areas within the AS. In the diagram, a single router is shown for each Area. In practice, multiple routers could be used for scalability or reliability purposes. Each router, however, must be connected to each sub-Area/VLAN within the Area. These connections can be either physical (as shown in the diagram), or virtual (using VLAN tags), depending on what the router supports.

Table 3 below shows the configuration information for each endpoint. A router (i.e. IP gateway) address is included for each sub-Area/VLAN.

**Table 3**

| | | **VLAN 4000** | | **VLAN 4001** | | **VLAN 4002** | |
|---|---|---|---|---|---|---|---|
| **Endpt** | **Area** | **IP Addr (assigned)** | **Router (assigned)** | **IP Addr (inferred)** | **Router (inferred)** | **IP Addr (inferred)** | **Router (inferred)** |
| Ws1 | 1.1.0.0/16 | 1.1.1.1 | 1.1.1.r. | 1.1.2.1 | I.I.2.r | 1.1.3.1 | 1.1.3.r |
| Ws2 | 1.1.0.0/16 | 1.1.1.2 | 1.1.1.r | 1.1.2.2 | 1.1.2.r | 1.1.3.2 | 1.1.3.r |
| Ws3 | 1.2.0.0/16 | 1.2.1.1 | 1.2.1.r | 1.2.2.1 | 1.2.2.r | 1.2.3.1 | 1.2.3.r |
| Ws4 | 1.2.0.0/16 | 1.2.1.2 | 1.2.1.r | 1.2.2.2 | 1.2.2.r | 1.2.3.2 | 1.2.3.r |
| Ws5 | 1.5.0.0/16 | 1.5.1.1 | 1.5.1.r | 1.5.2.1 | 1.5.2.r | 1.5.3.1 | 1.5.3.r |
| Ws6 | 1.5.0.0/16 | 1.5.1.2 | 1.5.1.r | 1.5.2.2 | 1.5.2.r | 1.5.3.2 | 1.5.3.r |
| Gw1 | 1.3.0.0/16 | 1.3.1.1 | 1.3.1.r | 1.3.2.1 | 1.3.2.r | 1.3.3.1 | 1.3.3.r |
| Gw2 | 1.3.0.0/16 | 1.3.1.2 | 1.3.1.r | 1.3.2.2 | 1.3.2.r | 1.3.3.2 | 1.3.3.r |
| Gw3 | 1.4.0.0/16 | 1.4.1.1 | 1.4.1.r | 1.4.2.1 | 1.4.2.r | 1.4.3.1 | 1.4.3.r |
| Gw4 | 1.4.0.0/16 | 1.4.1.2 | 1.4.1.r | 1.4.2.2 | 1.4.2.r | 1.4.3.2 | 1.4.3.r |

Based on the benefit foregoing, it should be apparent to those skilled the art that all computing devices connected to an intranet use multiple VLANs. By properly configuring a switching fabric (such as **302** shown in Figs. 3, 4, 8, 9, 13, 14 and 15), it is possible to guarantee that IP packets will take multiple paths in the network when sent from one endpoint to another in the local network. By taking different physical and logical paths through network, each share (portion of data) will take a different physical path, making it difficult for a snooper to see all the shares at one instance. Even if the snooper somehow managed to gain access to all shares of data, the snooper would still need to possess community-of-interest keys to decrypt the session keys and view the plaintext messages

It is noted that in any embodiment or exemplary implementation, obfuscation techniques may be used to further secure data-in-motion, such as inserting delays when portions of data are sent, and injecting IDLE (dummy) packets in between portions of actual data.

### Exemplary Unlcast Processing

Fig. 15 shows an exemplary network 1500 used to describe unicast as well as multicast processing scenarios below. Network 1500 includes: client workstations C and D that act as endpoint computing devices in network 1500, Network 1500 also includes a fabric in the form of switches and routers (S & R), a server S, a gateway G (described as 800 in Figs. 8 and 9), an external network (EN) - such as a portion of the internee - and a remote host X. Most of these devices, alternative embodiments of such devices, were introduced above with reference to other embodiments.

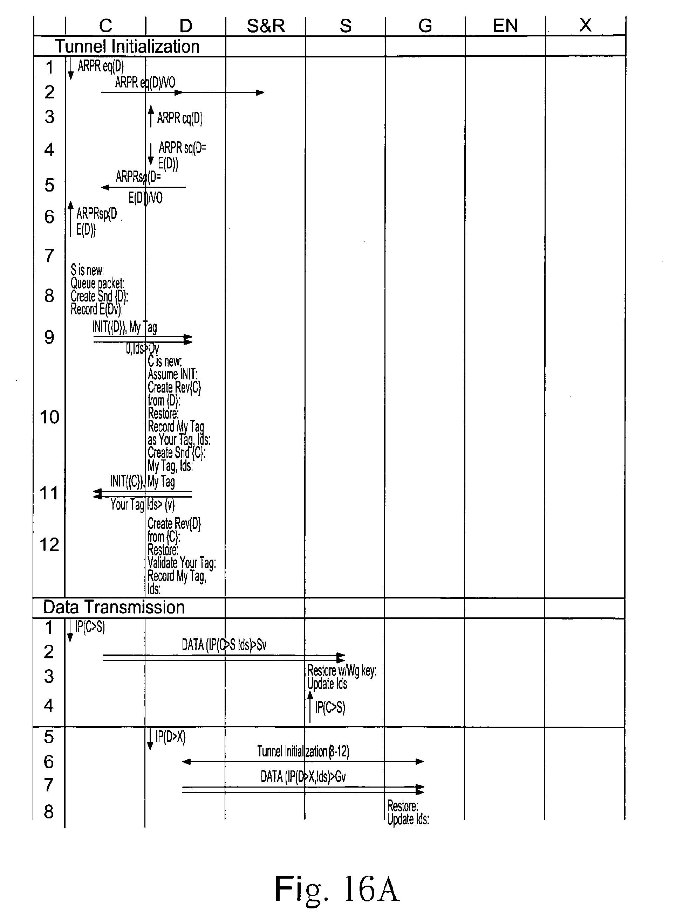

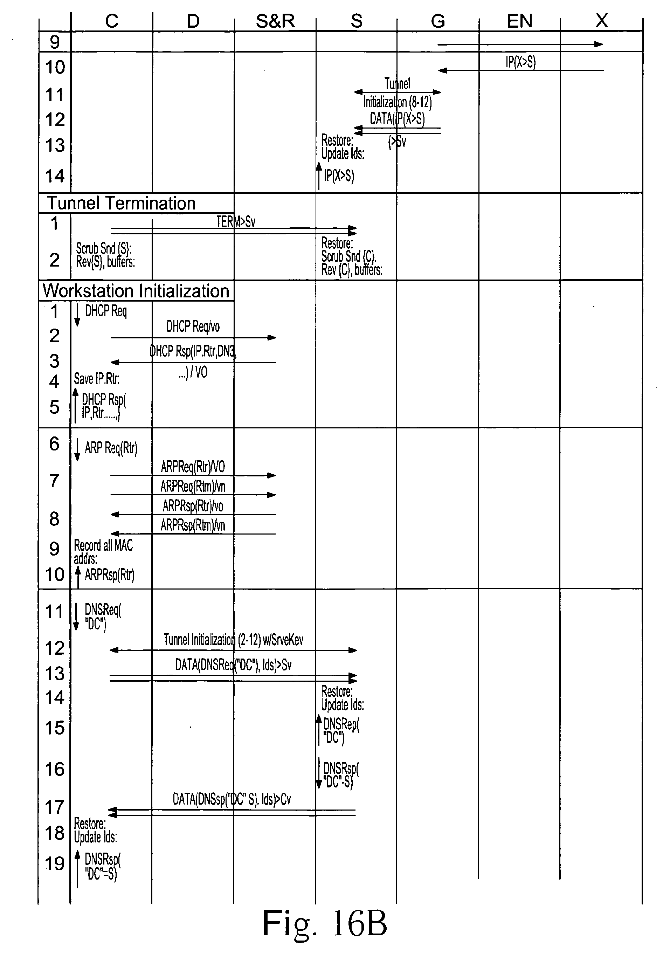

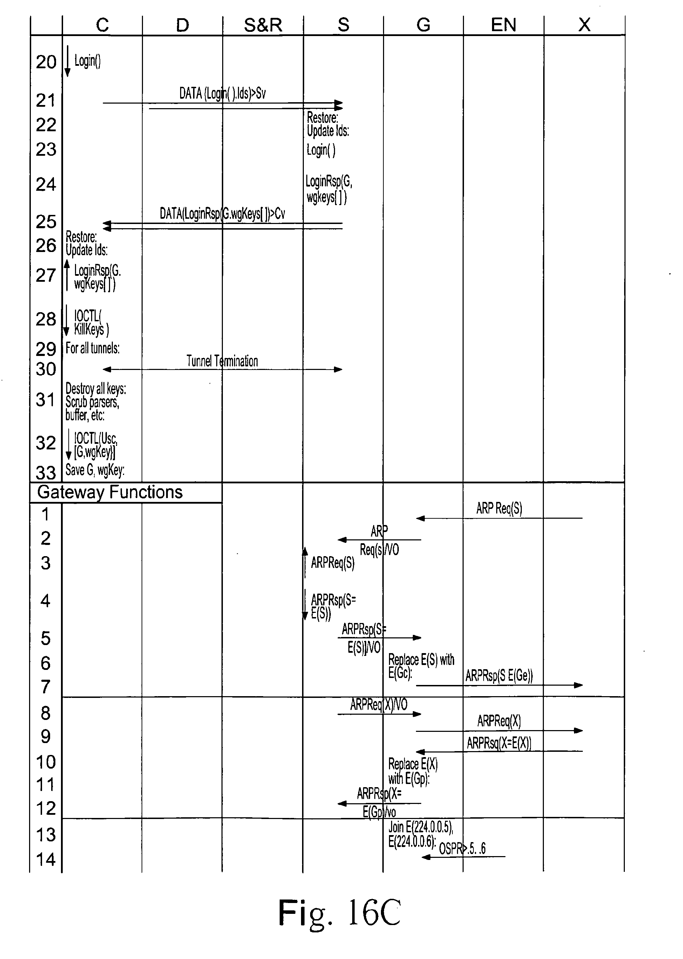

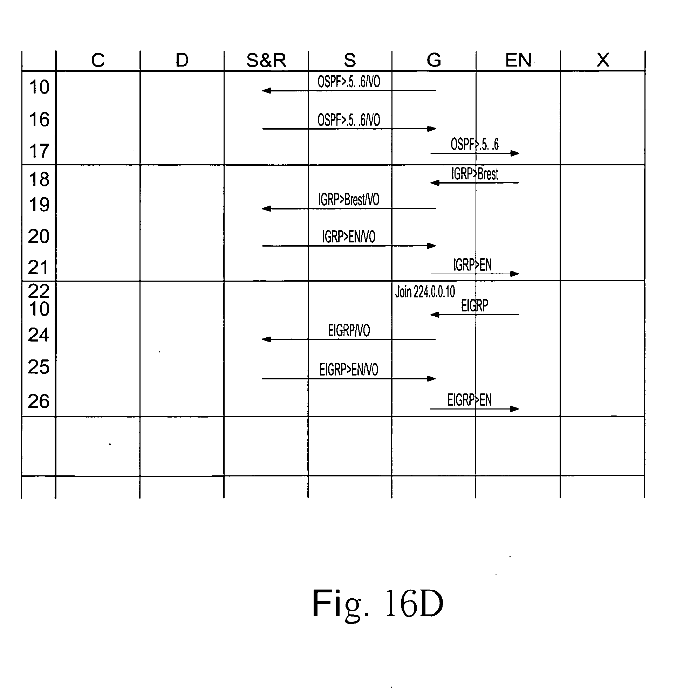

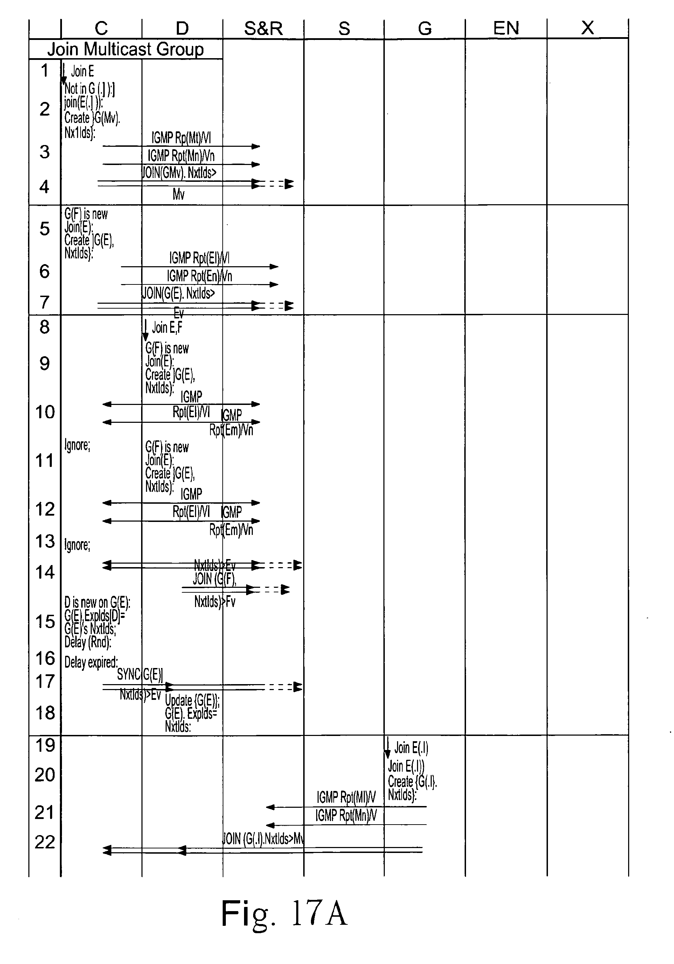

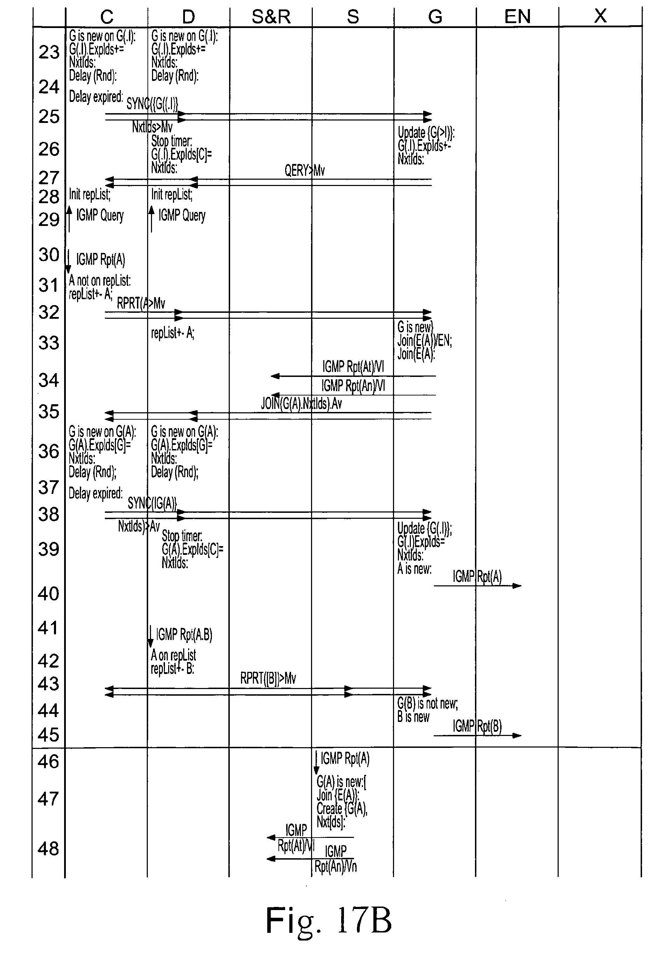

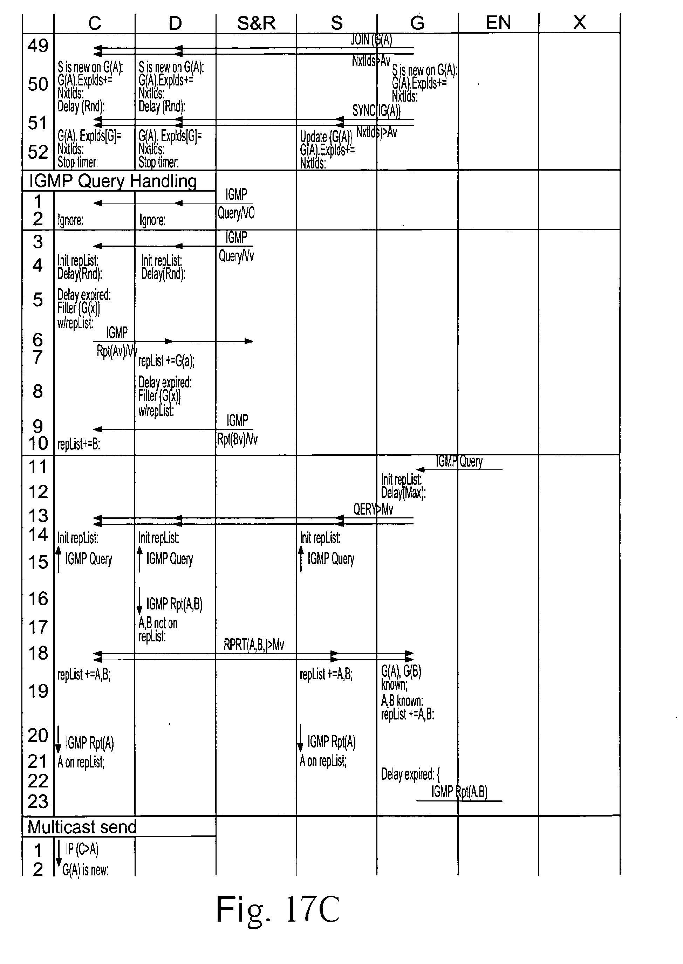

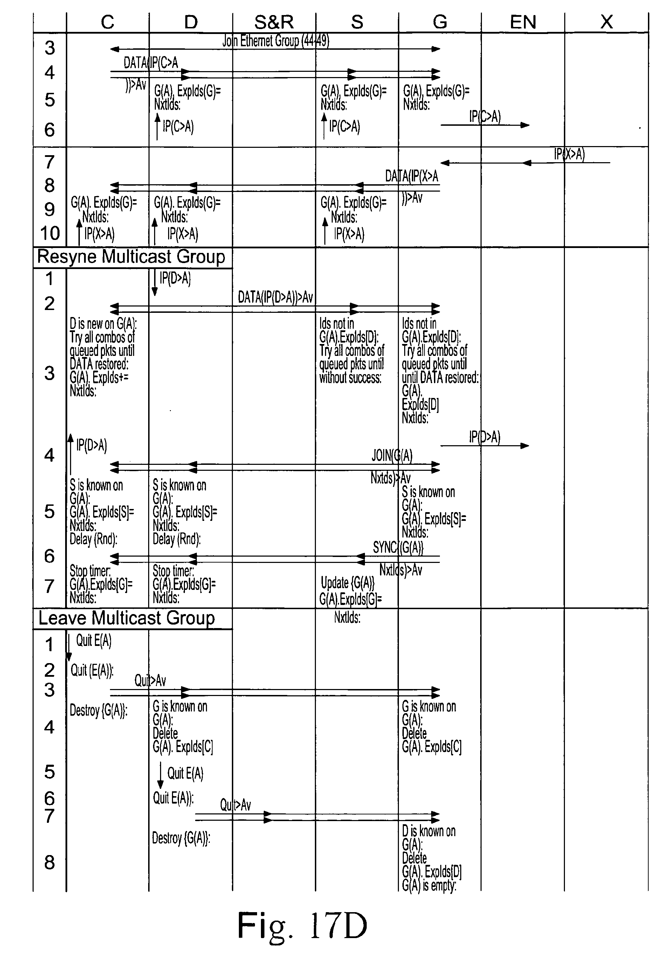

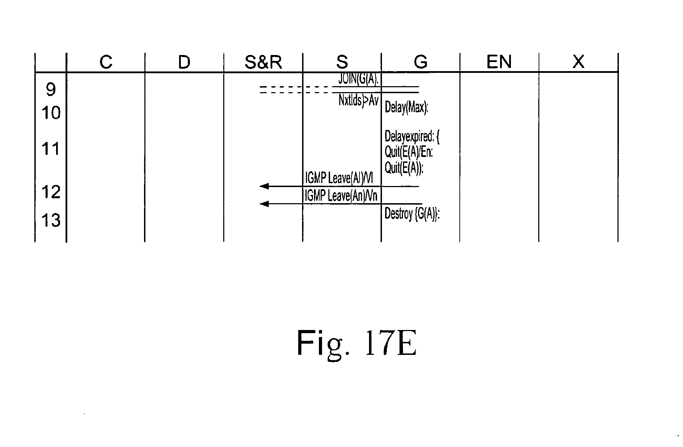

Abbreviations shown in Fig. 15 are used in ladder diagrams of Figs. 16A-16D, and 17A-17E. The ladder diagrams describe common packet handling scenarios procedures. Although the scenarios presented cannot exhaustively cover all possible sequencing of messages, they are representative of the most common methodologies, and general principles for sequencing. Those skilled in the art will understand how to adapt these general principles to other possible scenarios (not shown), after having the benefit of this disclosure and ladder diagrams.

The format of each ladder diagram incudes indicia in each column when a processing component is involved in an operational step of an example scenario. In some cases, low-level processing and message passing may be subsumed for the sake of clarity. A single column for switches and routers (S&R) column is used, although it should be understood that the single column could represent a set of transit networks with multiple nodes.

### Unicast Processing Scenarios

Figs. 16A-16D is a ladder diagram representing different stages of unicast processing, including: tunnel initialization; data transmission; tunnel termination; and workstation initialization. Each stage shall now be described with reference to the ladder diagram of Figs. 16A-16D.

For clarity purposes, individual VLANs are not shown, rather two transmission arrows in Figs. 16A-16D, e.g.^{→} are used to indicate a parsed message transmitted over multiple VLANs. Vertical arrows, ↓and ,↑indicate packets received from or delivered to the upper-layer protocol (IP).

### Tunnel Initialization

Referring to Figs. 16A-16D, the first scenario involves tunnel initialization. Tunnels are established on demand.
1) C's IP stack sends an Address Resolution Protocol (ARP) request for D's IP address.
2) C's Endpoint forwards the ARP request onto the LAN in the clear.
3) D's Endpoint receives the ARP request and passes it up to its IP stack.
4) Sometime later, D's IP stack sends an ARP response with D's Ethernet address.
5) D's Endpoint forwards the ARP response back to C.
6) C's Endpoint receives the ARP response and passes it up to its IP stack.
7) Sometime later, C's IP stack sends a packet to D.
8) D is a new address, so C's Endpoint queues the packet, creates a send parser, Snd{D}, and records E(Dv) from the packet.
9) D sends an INIT message to Dv containing Snd{D}, a random MyTag, YourTag=0, and a set of NextIds.
10) D receives the INIT share frames, and since C is new, it assumes the frames make an INIT message, So, it creates a receive parser, Rcv{C} from {D} in the packet, restores the rest of the message, and records MyTag as YourTag and the NextIds as Expectedlds. It then creates a send parser, Snd{C}, a random MyTag, and a set of Nextids.
11) D sends an INIT message to Cv with Snd{C}, MyTag, YourTag, and a set of Ids.
12) C receives the INIT frames, and creates a receive parser, Rcv{D} from {C} in the packet. It then restores the rest of the message and validates YourTag, records MyTag as YourTag, and the NextIds as Expectedlds.
13) C then sends the queued IP packet.

### Unicast Data Transmission

The data transmission scenario shows the nominal processing done to transmit IP packets between Endpoints. Three sequences are shown: communication within the parsed intranet to a previously known host; the first communication from a host on the parsed intranet to an external host; and the first communication from outside the parsed intranet, through the Gateway, to a particular local host.
1) C's IP stack sends a packet to S.
2) C's Endpoint sends a DATA message to Sv containing the original packet and NextIds.
3) S's Endpoint receives the DATA message, restores it with the current community-of-interest key, and updates its Expectedlds.
4) S passes the original IP packet up to its IP stack.
5) D's IP stack sends a packet to an external host, X.
6) Since D has never communicated outside of the parsed intranet, it initializes a tunnel to the Gateway, G.
7) D then sends a DATA message containing the original IP packet to Gv.
8) G restores the message and updates its Ids.
9) G forwards the original IP packet through the External Network, EN, to X. External host X sends a packet through EN to S.
10) S is a new address to G, so it establishes a tunnel to S.
11) G sends a DATA message containing the original IP packet to Sv.
12) S restores the message and updates its Ids.
13) S's Endpoint passes the original IP packet up to its IP stack.

### Tunnel Termination

The tunnel termination scenario is described below, and with reference to Figs. 16A-16D. The "TERM" is generated as a courtesy to the partner to allow it to clean up its memory.
1) C wishes to terminate its tunnel to S, perhaps because the community-of-interest key is being changed, or for some other administrative or error recovery purpose, so C's Endpoint sends a TERM message to Sv.
2) C then scrubs its Snd{S}, Rcv{S}, Ids arrays, and buffers.
3) S receives the TERM, restores it, and scrubs its Snd{C}, Rcv{C}, Ids arrays, and buffers.

### Workstation Initialization

Still referring to Figs. 16A-16D the next scenario shows the steps involved in workstation initialization. Three sequences are shown: DCHP handling (steps 1-5); Router ARP processing (steps 6-10); and initial communications to another host as exemplified by a DNS request/response, followed by the login process and subsequent change of community-of-interest keys (steps 11-33).
1) C's IP stack sends a DHCP request.
2) C's Endpoint forwards the DHCP request onto VLAN#0.
3) The local router sends back a DHCP response on VLAN#0, containing C's IP address, the Router's IP address, the DNS servers IP address, etc.
4) C's Endpoint save the pertinent information, like C's and the router's IP addresses.
5) The Endpoint then passes the DHCP response up to its IP stack.
6) Sometime later, C's IP stack sends an ARP request for the Router's IP address.
7) C's Endpoint forwards the ARP request onto VLAN#0, but also generates and sends ARP requests for the Router's inferred IP addresses onto the appropriate VLANs.
8) ARP responses are returned by the Router, and accumulated by C's Endpoint.
9) The corresponding MAC addresses are recorded.
10) When all ARP responses have been received, the ARP response received on VLAN#0 is passed up to the IP stack.
11) Sometime later, C's IP stack sends a DNS request for the Domain Controller "DC".
12) C's Endpoint establishes a tunnel using the Service Key to the IP address of the DNS server contained in the IP packet.
13) Steps 3-19 show normal data flow, which in this case happens to be the DNS request/response processing
20) Steps 20-27 show normal data flow, which represents the Login processing.
28) After the login has been completed, an IOCTL indicating that all keys should be deleted comes down.
29) For all known tunnels:
30) The tunnel is terminated.
31) All keys, parsers, buffers, etc. are destroyed and scrubbed.
32) Sometime later, an IOCTL is received indicating a list of new Community-of-interest keys and their associated Gateways to be used.
33) The Workgroup Tuples are saved;

### Exemplary Multicast Processing

As used herein the term "multicast" or "IP multicast" refers to the delivery of data to a group of one or more endpoints simultaneously.

In accordance with one embodiment of the invention, data of a multicast, like unicast data, is protected through the use of double encryption keys, such as a community-of-interest key and session key. Data of a multicast is also split into portions of multicast in accordance with the session key, and transmitted over a choice of different pathways to the group of one or more endpoints.

The community-of-interest key is a prerequisite to joining or requesting deliver of a particular multicast, and is used to initialize and exchange a session key. Whereas, the session key is used to cryptographically split data of the mulitcast into portions of the mulitcast, and each portion is transported over a choice of multiple separate data paths, referred to as tunnels, to one or more destinations.

In one high security implementation, tunnels are a set of communication paths between pairs of endpoints (unicast), or groups of endpoints (mulicast). Each point-to-point communication path has a unique bidirectional encryption characteristic, i.e., an encryption key for each direction, and a starting value for a random number generator. A set of values is unique for each pair of endpoints that desire to communicate with each other. So, for each tunnel established, there are unique session keys that are generated. And the community-of-interest keys are used to initialize and exchange of those session keys.

In one embodiment, all endpoints in a particular multicast group share the same session keys values. Therefore, endpoints that join a group (tune-in) must be notified of the session keys that are being used by the group at that particular time. To join a group a requester typically sends a multicast join message to a known multicast address in a range of addresses. From the perspective of the requester, the protocol used by an endpoint to join a group is the Internet Group Management Protocol or IGMP, having an associated address with the request.

So, all endpoints that are members of these addresses in the network, receive the request. Of course, in the exemplary implementation, the request to join is parsed and split-up, by first establishing a unicast tunnel. That is, the join message is parsed using a community-of-interest key that contains a session key that is to be used thereafter to restore packets associated with the request of addresses. Any devices listening on those addresses will receive the request, and start a timer.

Most devices that are part of a group will not respond to avoid flooding the network, Rather, only one device that is part of the group will reply (with the earliest timer alarm), usually with the present session key being used by the group.

In one embodiment, the gateway serves as the keeper of all session keys, and will always respond to an endpoint device request to join a multicast. Since the gateway communicates with any external routers, the gateway acts as an intermediary between endpoints in a secure network and any external routers, such as a remote host (see Fig. 15). In one embodiment, to ensure that the gateway is the first to respond to anyone request to join a multicast, the gateway's timer is set to zero.

In one embodiment, the community-of-interest keys will be reused by the gateway device and device with access to the multicast, but session keys are randomly generated per multicast, and at any particular time during a multicast session. That is, unique session keys are generated and used for each group instance. So, much effort is spent initializing and exchanging session keys with new comers to a group.

Thereafter, packets of the multicast are cryptographically split as with unicast packets.

A "Join" request is usually sent by the network layer protocol in the device to its underlying link layer protocol to request a join of an Ethernet address group. That address, is mapped to a community-of-interest of N IP addresses corresponding to each VLAN associated with the workgroup for the multicast. That is, the session key is used to cryptographically split data of the multicast, into portions of the mulitcast, and each portion of the mulitcast is transported over a choice of N multiple separate data paths, referred to as tunnels, to one or more destinations. The Ethernet address associated with the multicast is mapped to each of the N IP addresses corresponding to each VLAN associated with the community-of-interest for the muliticast.

Referring back to Fig. 15, unidirectional, multicast tunnels, transfer multicast data in secure fashion. These tunnels are one-to-many transmission channels, where a single endpoint transmits all data through the tunnel, but many other endpoints may receive the data. The sending endpoint has the ability to parse data into shares, each share associated with a particular tunnel. By contrast, each of the receiving endpoints has the ability to combine the parsed shares back into its original format. That, is the receiving endpoints retransform the split/parsed multicast data back original format so that the data can be read and understood.

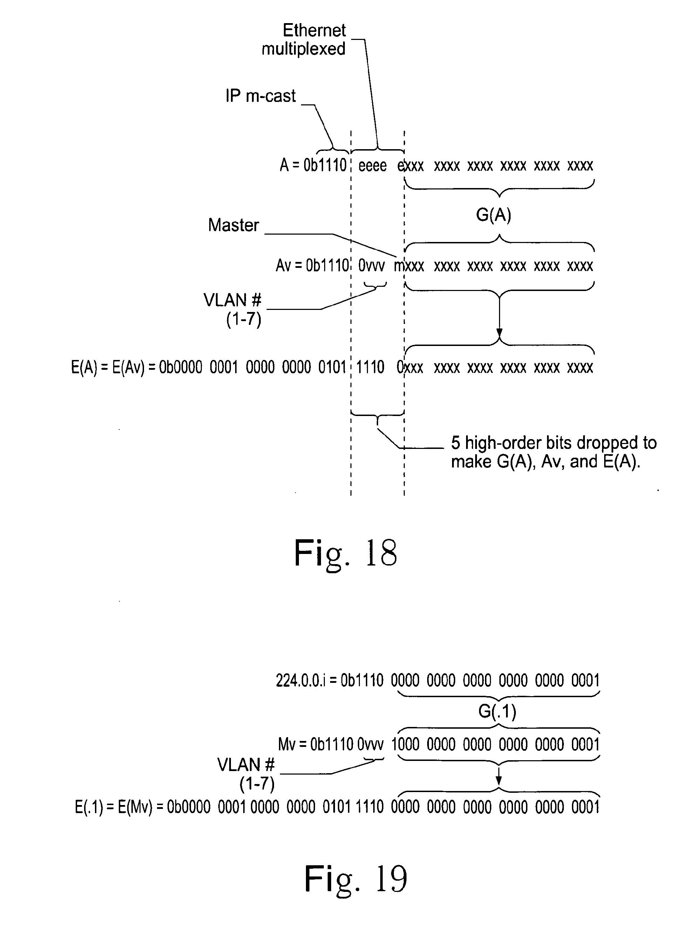

Multicast data is typically used for webcasting, audio/video conferencing, or other collaborative functions. Multicast data is facilitated through the use of the Internet Group Management Protocol (IGMP). "Class D", or "host group" IP addresses, i.e. those with 0b1110 as their high-order four bits (see, e.g. Fig. 18). In dotted decimal notation, host group addresses range from 224.0.0.0 to 239.255.255.255 . The address 224.0.0.0 is unused, and 224.0.0.1 is assigned to a permanent group of all directly-connected hosts (including routers). All multicast-capable hosts must join group 224.0.0.1. Packets sent to 224.0.0.1 are not propagated beyond the local LAN segment.

To send a multicast datagram, a host sets the DestinationAddress of the IP header to a group address, and the destination address in the MAC layer header to a multicast address that corresponds with the group IP address. For Ethernet LANs, the low-order 23 bits of the IP address are mapped into the low-order 23 bits of the Ethernet multicast address 01-00-5E-00-00-00 (hex). Since group IP addresses have 28 significant bits, 32 IP group addresses are mapped to each Ethernet multicast address. When an Ethernet multicast frame is transmitted onto the LAN, all stations which have enabled the receipt of that particular multicast address will receive the frame.

IGMP defines two protocol data units (PDUs): Host Membership Query, and Host Membership Report. Multicast routers send IGMP Query messages to determine what host groups are in use on a particular LAN segment. Hosts respond to IGMP Queries with IGMP Report messages. Each IGMP Report notifies the router that some host on the local LAN segment is listening for multicast traffic on a particular group address. Hosts use random delay timers and listen to other hosts' IGMP Reports so that, ideally, each active group address is reported only once to the router. However, when a host joins a group (i.e. enables the receipt of messages sent to that group address), it immediately sends out an unsolicited IGMP Report, rather than waiting for a Query from the router.

Routers may use IGMP to exchange group membership information with other routers, or they may use some other, possibly proprietary, mechanism. Regardless, the fact that even a single host, located many hops away, is listening to a group address is ultimately communicated to the router adjacent to the host sourcing a webcast.

In the multicast scenarios that follow, IP address "A" is used as the host group address. M1..Mn are statistically assigned host group addresses, each corresponding to a particular VLAN (1..N). M1..Mn are used to communicate multicast control packets (QERY and RPRT). Group address A1..An are in a range of addresses presently reserved by IANA (225.0.0.0-232.255.255.255), which are derived from A according to Fig. 18, which shows a multicast address mapping diagram.

IP multicast addresses have the high-order four bits set to 0b1110. This leaves twenty-eight bits to represent unique multicast addresses. These 28-bit addresses must be mapped into the available twenty-three bits of Ethernet group addresses. So, five bits ("eeee e") must be dropped to form an Ethernet group address from an IP multicast address.

N VLAN-specific IP multicast addresses must be inferred from A, so A must be transformed into the VLAN-specific address set A1..An (generically, Av). Av is in a range of addresses currently reserved by IANA (225.0.0.0-232.255.255.255). So, to map an IP multicast address A into Av: bits 0-3 (0b1110) remain the same, bit 4 becomes zero, and bits 5-7 (vvv) are replaced with the VLAN# (1-7). Bit 8 is the Master bit, which when set indicates an address used for MLSTP signaling. The remaining twenty-three bits (9-31) stay the same and are represented by G(A). So, each VLAN has an inferred address range of:

| | |
|---|---|
| VLAN#0 | 225.0.0.0-225.255.255.255 |
| VLAN#1 | 226.0.0.0-226.255.255.255 |
| : | |
| VLAN#7 | 232.0.0.0-232.255.255.255 |

This imposes an upper limit to N of 7, since VLAN#7's address range is 232.0.0.0-232.256.255.255 which is the top of the reserved range. Other ranges could be configured that are more or less seven, as would be appreciated by those skilled the art after having the benefit of this disclosure.

Converting A to an Ethernet group address E(A) Involves adding the low-order twenty-three bits of A, G(A), to the base Ethernet group address 0x01005E000000. E(A) is the same for all values of Av.

Fig. 19 is another derivation diagram that shows an example of how M1..Mn (or, Mv) is derived from the "all-hosts" local multicast address 224.0.0.1 using the algorithm outlined above. Therefore, M1 =225.128.0.1, M2=226.128.0.1, ..., M7=232.128.0.1, and E(.1) = E(Mv).

It should be noted that an Endpoint may be tolerant of receiving packets for groups which the host has not joined, since multiple IP addresses are multiplexed onto a single MAC-level address. The IP Destination Address can be checked against the list of IP-leuel groups which the host has joined. The Endpoint may also be tolerant of receiving control packets on M1..Mn which can not be restored. All communities-of-interest share M1..Mn as their signaling addresses, so received control messages may have been split using community-of-interest keys of which a host is not aware. The IP Source Address should be compared against known senders on the group address.

### Multicast Processing Scenarlos

Figs. 17A-17E illustrate common packet handling scenarios for multicast data according to one embodiment of the invention. In particular, Figs. 17A-17E illustrate five scenarios:
1) Join Multicast Group - shows how Endpoints join a particular multicast group;
2) IGMP Query Handling - the means by which Endpoints and IP routers keep multicast groups active and synchronized;
3) Multicast Send - the method that Endpoints use to exchange multicast packets;
4) Resync Multicast Group - method an Endpoint uses to resynchronize with a multicast group when it has lost too many frames; and
5) Leave Multicast Group - termination of an Endpoint's participation in a multicast group, and subsequent clean-up when the group is no longer active.

The Join Multicast Group scenario contains four sequences: the first Endpoint, C, to join any group (steps 1-4); a subsequent Endpoint, D, which joins the group to which only C belongs (steps 5-15); a Gateway, G, setting up for multicast by joining the master group G(.1) (steps 16-42); and another Endpoint, S, joining a group when there is an active Gateway as a result of an IGMP Report from its upper layers (steps 44-50).
1) C's IP stack sends a request to join the Ethernet address E.
2) C has not already joined E(.1), i.e. E(Mv), so C's Endpoint joins Ethernet group E(.1). It also creates a structure for G(.1) including a parser and Expectedlds array.
3) C issues IGMP Reports for M1..Mn on the appropriate VLANs.
4) C then issues a JOIN message for G(.1) to Mv. Since C is the first active Endpoint, no one else receives or responds to the JOIN.
5) G(E) is new, so C's Endpoint joins Ethernet group E. It also creates a structure for G(E) including a parser and Expectedlds array.
6) C issues IGMP Reports for E1..En on the appropriate VLANs.
7) C then issues a JOIN message for G(E) to Ev. Since C is the first active
   Endpoint, no one else receives or responds to the JOIN.
8) D's IP stack sends a Join request for Ethernet addresses E and F.
9) G(E) is new, so D joins E and creates a structure for G(E).
10) D issues IGMP Reports for E1..En on the appropriate VLANs.
11) C receives the IGMP Reports, but ignores them. In the meantime, G(F) is also new to D, so it joins F at the MAC layer and creates a structure for G(F).
12) D issues IGMP Reports for F1..Fn on the appropriate VLANs.
13) C receives the IGMP Reports, but ignores them.
14) D issues JOIN messages for G(E) to Ev and G(F) to Fv, with the respective NextIds. The JOIN sent to Fv is not received by any other Endpoint.
15) C receives the JOIN for G(E). D is new on G(E), so the NextIds are added to C's G(E).Expectedlds array. C then starts a random-timeout delay timer.
16) C's delay timer expires.
17) C issues a SYNC message containing the parser config for G(E) and C's NextIds for G(E) to Ev.
18) D receives the SYNC, updates its G(E) parser to be in sync with the rest of the group, and updates adds C's NextIds to its Expectedlds array for G(E).
19) G's IP stack sends a Join request for E(.1).
20) G joins E(.1) and creates a parser and NextIds array for .1.
21) G issues IGMP Reports for M1..Mn on the appropriate VLANs.
22) G sends a JOIN for G(.1) to Mv.
23) C and D receive the JOIN. G is new for both on G(.1), so they add G's NextIds to their Expectedlds arrays for G(.1) and start random-delay timers.
24) C's timeout expires first.
25) C sends a SYNC message for G(.1) with the G(.1) parser and its G(.1) NextIds to Mv since it contain G(.1).
26) D receives the SYNC, stops its timer, and updates C's NextIds in its Expectedlds array for G(.1). When G receives the SYNC, it updates its G(.1) parser and adds C's Nextids to its G(.1) Expectedlds array.
27) G then issues a QERY to Mv.
28) Both C and D receive the QERY and each initializes a repList.
29) C and D then push an IGMP Query up to their IP stacks.
30) C's IP stack responds with an IGMP Report that contains the IP multicast address A.
31) A is not in C's repList, so it is added.
32) C then issues a RPRT containing A to Mv.
33) D receives the RPRT and adds A to its repList. G also receives the RPRT, and since G(A) is new, it joins E(A) on both adapters.
34) G then issues IGMP Reports for A1..An to the appropriate VLANs.
35) G issues a JOIN for G(A) to Av.
36) C and D receive the JOIN, and since G is new on G(A), they add G's Nextids to their Expectedlds arrays for G(A). They then start random-delay timers.
37) C's timer expires first.
38) C issues a SYNC for G(A) with its parser and NextIds to Av.
39) D receives the SYNC, stops its timer, and updates C's Expectedlds. G also receives the SYNC, updates its parser for G(A) and adds C's NextIds to its Expectedlds array. Since A is new:
40) G issues and IGMP Report to the external network, EN, for A.
41) Sometime later, D's IP stack sends and IGMP Report containing A and B.
42) A is already on the repList, so it is ignored. B is not, however, so it is added.
43) D issues a RPRT for B to Mv.
44) C receives the RPRT and adds B to its repList. But, since C is not in B, it otherwise ignores it. G also receives the RPRT, but since in this case G(A)=G(B), G(B) is not new. Therefore, it does no JOIN/SYNC processing. In this example, B is new, however, so:
45) G issues an IGMP Report for A and B to EN.
46) S's IP stack sends an IGMP Report containing A.
47) In this case, G(A) is new to S, so it joins E(A), and creates a structure for G(A) and associated NextIds.
48) S issues IGMP Reports for A1..An on the appropriate VLANs.
49) S issues a JOIN for G(A) to Av.
50) C, D and G all receive the JOIN, and since S is new to G(A), they add S's NextIds to their ExpectedIds arrays for G(A). C and D then start random-delay timers, but since G is a Gateway, it does not.
51) G immediately responds with a SYNC containing the parser for G(A) and its NextIds directly to Av.
52) C and D receive the SYNC, update G's NextIds in their Expectedlds arrays, and stop their timers. S also receives the SYNC, updates its G(A) parser, and adds G's NextIds to its Expectedlds array for G(A).

IGMP Query Handling shows three sequences: IGMP Query received by an Endpoint on VAN#0 (steps 1-2); an IGMP Query received by an Endpoint on a VLAN other than 0 (Vv) (steps 3-10); and an IGMP Query received by G from EN (steps 11-23).
1) S&R issues an IGMP Query on VLAN#0.
2) C and D receive the IGMP Query, but since its on V0, they ignore it.
3) S&R issues an IGMP Query on a non-zero VLAN, Vv.
4) C and D receive the IGMP Query, initialize a repList, and delay for random periods.
5) Some time later, C's timer expires, so it filters its list of G(x)s with repList.
6) C issues an IGMP Report to Vv containing Av.
7) D receives the IGMP Report, and since there is query pending, it updates repList with G(Av)=G(A).
8) Some time later, D's timer expires and it filters its address list using repList.
9) D issues an IGMP Report to Vv containing just Bv.
10) C receives the IGMP Report, and adds G(B) to its repList, which doesn't matter, since it has no query pending anymore.
11) EN issues an IGMP Query.
12) G receives the IGMP Query from EN and initializes a repList. It then start a maximum-delay timer.
13) G then issues a QERY to Mv.
14) C, D, and S receive the QERY, and initialize their repLists.
15) C, D, and S all push an IGMP Query up to their IP stacks.
16) Some time later, D's IP stack sends an IGMP Report containing A and B.
17) Neither A nor B are on D's repList, so:
18) D issues a RPRT for A and B to Mv.
19) C and S receive the RPRT and add A and B to their repLists. G also receives the RPRT, but since G(A), G(B), A, and B are all known, it only adds A and B to its repList.
20) Later, C's and S's IP stacks send IGMP Reports containing A.
21) Since A is already on their repLists, they do nothing.
22) Eventually, G's timer expires.
23) G issues an IGMP Report containing all entries on its realist (A and B) to EN.

The Multicast Send scenario includes two sequences: first send to a known group by an Endpoint not previously in the group (steps 1-6); and send to a group from an external host (steps 7-10).
1) C's IP stack sends a data packet to A.
2) Since G(A) is new to C's Endpoint:
3) C completes the Join Multicast Group sequence 44-49.
4) C sends a DATA message containing the IP packet to Av.
5) D, S, and G receive the DATA message and updates their Expectedlds,
6) D and S pass the IP packet up to their IP stacks, and G forwards the IP packet to EN.
7) Remote host X sends an IP packet to A, and EN forwards it to G.
8) G sends a DATA message containing the IP packet to Av.
9) C, D, and S update their Expectedlds.
10) C, D, and S pass the IP packet up to their IP stacks.

Resync Multicast Group has one sequence - when an Endpoint's parser can not restore a received message. There are three cases shown: C doesn't know about the sender D; the NextIds are not in S's Expectedlds array for D and the DATA can not be restored because the S's parser does not match D's; the NextIds are not In G's ExpectedIds array, either, but G can piece together the DATA.
1) D's IP stack sends a packet to A.
2) D sends a DATA message containing the IP packet to Av.
3) C receives the DATA packets, but C doesn't know D is in G(A), so it tries all combinations of packets it has received from D on Av until it successfully restores the DATA. S receives the DATA packets, but can not restore them because the NextIds don't match, and the parser S has for G(A) is not correct. G also receives the DATA packets, but the NextIds are not in its Expectedlds array for D.
4) Since C successfully restored the DATA, it passes the original IP packet up to its IP stack. G also successfully restored the DATA, so it forwards the IP packet to EN. S was not able to restore the DATA, so it issues a JOIN for G(A) to Av.
5) C, D, and G all receive the JOIN, and since S is known on G(A), they update S's Expectedlds array entry. C and D start random-delay timers, but G, being a Gateway, does not.
6) G issues a SYNC for G(A) to Av.
7) C and D receive the SYNC, stop their timers, and update their Expectedlds array entry for G. S also receives the SYNC and updates its parser for G(A) and Its Expectedlds entry for G.

Leave Multicast Group shows two sequences: how an Endpoint leaves a group by quitting an Ethernet group (steps 1-4); and how a Gateway detects a null group after the last member has left (steps 5-13).
1) C's IP stack sends a Quit for Ethernet address E(A).
2) C quits E(A) on the adapter.
3) C issues a QUIT to Av.
4) C then destroys its G(A) structures. D and G receive the QUIT, and since C is known on G(A), they delete their Expectedlds array entry for C on G(A).
5) D's IP stack sends a Quit for Ethernet address E(A).
6) D quits E(A) on the adapter.
7) D issues a QUIT to Av.
8) D destroys its G(A) structures. G receives the QUIT, and since D is known on G(A), it deletes the corresponding Expectedlds array entry. G now detects that G(A) is empty, i.e. there are no more Endpoints left in the group.
9) G issues a JOIN for G(A) to Mv.
10) G starts a maximum-delay timer.
11) Sometime later, the timer expires. This means G(A) is really empty, so G quits E(A) on both adapters.
12) G issues IGMP Leaves for A1..An on the appropriate VLANs.
13) G then destroys its G(A) structures.

Thus, the gateway is the keeper of session keys, and acts the responder to an endpoint requesting to join a multicast according the exemplary embodiment above. Those skilled in the art should readily appreciate after having the benefit of this disclosure that other devices within a network, may act as the primary responder to requests to join a request.

It is to be understood that the present invention is not limited to the embodiments described above, but encompasses any and all embodiments within the scope of the subjoined Claims including their equivalents.

## Claims

1. A method of securing data in a private network, the method comprising:
receiving a request from a first endpoint in the private network to join a multicast transmitted from an external host to the private network, the request encrypted with a session key, which is further encrypted by a particular community-of-interest key;
decrypting the session key according to the particular community-of-interest key; and
contacting the external host on behalf of the first endpoint to join the multicast.

2. The method of Claim 1, further comprising decrypting the request using the session key, and sending an Internet Group Management Protocol query corresponding to the request.

3. The method of Claim 1, further comprising receiving a multicast transmission from the external host at a second endpoint device in the private network, and encrypting each portion of the multicast transmission using a cryptographic data set, the cryptographic data set including encryption/decryption keys for establishing a communication session between the first and second endpoint devices; and encrypting the cryptographic data set using a community-of-interest key, wherein the community-of-interest key is a shared key residing in the first and second endpoint devices, the community-of-interest key corresponding to a community-of-interest associated with at least one of the first and second endpoint computing devices.

4. The method further comprising:
receiving a multicast transmission from the external host at a second endpoint device in the private network,
using a community-of-interest key to encrypt a cryptographic data set including splitting the cryptographic data set into portions in accordance with the community-of-interest key;
transmitting, to the first endpoint, the portions of the cryptographic data set separately using the community-of-interest key;
using the cryptographic data set to encrypt the multicast, including splitting the multicast into portions of the multicast in accordance with the cryptographic data set; and
transmitting, to the endpoint, the portions of the multicast separately using the cryptographic data set.

5. A gateway device for securing data in a private network, the gateway device comprising:
means for receiving query to join a multicast address; the query including configuration data that is in an encrypted format, the configuration data for use to establish a communication session between a first computing device and the gateway device;
means for using a first key to attempt to decrypt the configuration data;
means for providing a communication session between the first computing device and the gateway device for the transmission of a data set from the first computing device to the gateway device, when the attempt to decrypt the configuration data using the first key is successful.

6. In a receiving device, a method for joining a multicast group, the multicast group associated with a particular community-of-interest, comprising:
encrypting a first cryptographic data set including splitting the first cryptographic data set into portions in accordance with a community-of-interest key, the community-of-interest key associated with the particular community-of-interest;
transmitting a request message to join a multicast group address including splitting the request message into portions of the request message in accordance with the first cryptographic data set;
receiving an encrypted synchronization message that contains a second cryptographic data set; and
using the community-of-interest key associated with the particular community-of-interest to decrypt the synchronization message, and obtain the second cryptographic data set; and using the second cryptographic data set to obtain and decrypt a data flow associated with the Multicast group address.

7. The method of Claim 6, further comprising sending the encrypted synchronization message back to the receiving device after receiving transmission of the request message.

8. The method of Claim 6, further comprising receiving the request message, and after a predetermined period, sending the encrypted synchronization message back to the receiving device.

9. The method of Claim 6, wherein the receiving device must be a member of the particular community-of-interest to join the multicast group address.

10. The method of Claim 6, further comprising receiving the request message, and after a predetermined period, sending the encrypted synchronization message back to the receiving device, wherein the sending of the synchronization message is performed by a gateway device.

11. The method of Claim 6, receiving the request message, and contacting an external host on behalf of the receiving device.

12. The method of Claim 6, wherein the receiving device is a endpoint in a private network

13. The method of Claim 11, wherein a gateway receives the request message and contacts the external host.
